# FASCICULE DE BREVET EUROPEEN

(11) **EP 2 403 217 B1**
(45) Date de publication et mention de la délivrance du brevet: **13.04.2016**
(21) Numéro de dépôt: 11171639.5
(22) Date de dépôt: 28.06.2011
(51) Int. Cl.: H04M 3/42, H04L 29/08

(54) **PROCÉDÉ ET DISPOSITIF DE GESTION DE COMMUNICATION LORS D'UNE SITUATION DE COMMUNICATION CROISÉES**
VERFAHREN UND VORRICHTUNG ZUR KOMMUNIKATIONSVERWALTUNG IM FALL VON SICH ZEITLICH ÜBERSCHNEIDEN ANRUFEN
METHOD AND DEVICE FOR MANAGING COMMUNICATIONS WHEN CROSSED CALLS OCCUR

(30) Priorité: 30.06.2010 FR 1002717; 01.07.2010 FR 1055277
(43) Date de publication de la demande: 04.01.2012
(73) Titulaire: Orange, 75015 Paris (FR)
(72) Inventeur: Levee, Francois-Joseph, 22550 Henanbihen (FR); Tronet, Sarah, 22300 Lannion (FR)

(56) Documents cités:
- WO-A1-2004/102890
- US-A1- 2006 200 469
- US-A1- 2009 310 598

## Description

L'invention concerne un procédé de gestion de communication, un dispositif de gestion de communication, un procédé de communication, un dispositif de communication. En particulier, l'invention concerne la gestion de communication lors d'une situation de communications croisées.

Dans un cas d'usage simple tel qu'un scénario d'appels croisés durant lequel : Alice utilise son téléphone mobile pour appeler le téléphone mobile de Bob à travers un réseau de communication. Bob ne répond pas. Et Alice est redirigée vers la messagerie vocale de Bob. Si Alice décide de laisser un message à Bob et que Bob essaie d'appeler Alice alors qu'elle est en train d'enregistrer son message pour Bob, le téléphone mobile d'Alice peut la notifier d'un appel entrant en identifiant l'appelant, en l'occurrence Bob, si le téléphone mobile d'Alice supporte le « double appel » sinon Bob est notifié que le téléphone mobile d'Alice est déjà en communication. Par « double appel » est entendu un service permettant de notifier un téléphone en communication d'un nouvel appel entrant par une tonalité spécifique (tel qu'un bip) et/ou l'affichage du numéro de téléphone de l'appelant et/ou du nom de l'appelant.

Si Alice reçoit une notification de « double appel », elle peut décider de prendre l'appel entrant en provenance du téléphone mobile de Bob.

Ce scénario affecte le taux de réussite des appels pour les clients notamment car il suppose que l'appelé supporte le double appel ce qui constitue une contrainte. En outre, même lorsque le téléphone de l'appelé supporte le double appel, l'interface proposant le double appel n'est pas toujours ergonomique ni intuitive car notamment elle ne permet pas toujours à l'appelé de prendre une décision et/ou de commander sans risque d'erreur la mise en communication avec le nouvel appelant. C'est pourquoi, de nombreux appels sont raccrochés alors que l'appelant souhaitait prendre l'appel.

La demande de brevet JP2000307727 propose de référencer chaque message vocal déposé avec le numéro de téléphone de l'appelant, le numéro de téléphone de l'appelé et la date d'enregistrement. Ainsi, lorsque l'appelé souhaite appeler l'appelant, il est notifié avant l'établissement de l'appel qu'un message de l'appelant à son intention est disponible pour qu'il puisse éventuellement l'écouter avant la mise en communication.

Un des buts de la présente invention est d'apporter des améliorations par rapport à l'état de la technique.

Un objet de l'invention est un procédé de gestion de communication entre dispositifs de communication comportant une demande de création de communication comportant un identifiant unique de communication identique pour toutes demandes de création de communication entre les mêmes au moins un premier utilisateur et un deuxième utilisateur quelque soit l'utilisateur appelant, la demande de création de communication étant apte à permettre un établissement d'une communication identifiée par l'identifiant unique de communication, entre au moins un dispositif de communication associé au premier utilisateur et un dispositif de communication associé au deuxième utilisateur.

Ainsi, l'invention permet de détecter une communication en cours utilisant le même identifiant unique de communication c'est-à-dire les communications en cours mettant en relation un premier utilisateur et un deuxième utilisateur quelque soit l'utilisateur à l'origine de la communication: détecter une situation de communications croisées entre deux utilisateurs.

En outre, l'identification des communications par l'identifiant unique de communication selon l'invention permet de détecter les situations de communications croisées sans affecter les performances du réseau notamment car l'invention ne nécessite pas de stocker des données (tels que identifiant de l'appelant et identifiant de l'appelé) concernant toutes les communications en cours, ni de comparer systématiquement toutes les requêtes d'établissement de communication avec des données stockées pour détecter les situations de communications croisées.

L'identifiant unique de communication selon l'invention étant fonction des utilisateurs et non des dispositifs de communication, la détection d'une situation de communication est ainsi permise quelque soit les dispositifs de communications (terminaux tels que téléphone fixe, téléphone mobile, ordinateur, télévision, visiophone, messagerie vocale ou Visio, dispositif de partage de contenu...) utilisés par ces utilisateurs pour la communication en cours et la communication pour laquelle une création de communication est demandée.

L'invention permet aussi la gestion d'appels croisés sans nécessiter l'utilisation d'un service spécifique tel que le double appel.

Avantageusement, la demande de création de communication comporte une demande d'ouverture de session de communication entre le premier utilisateur et le deuxième utilisateur, la demande d'ouverture de session de communication identifiée par l'identifiant unique de communication.

Ainsi, si une session de communication identifiée par un identifiant unique de communication est déjà ouverte lorsque l'ouverture d'une nouvelle session avec le même identifiant unique de communication est demandée, le procédé de gestion de communication se retrouve dans une situation de conflit puisque la session de communication demandée est déjà ouverte qui permet de détecter la situation de communications croisées sans opération supplémentaire.

Avantageusement, le procédé de gestion de communication comporte une génération de l'identifiant unique de communication déclenchée par une réception de requête d'établissement de communication entre le premier utilisateur et le deuxième utilisateur.

Ainsi, toute requête d'établissement de communication d'un dispositif de communication donne lieu à l'établissement d'une communication identifiée par un identifiant unique de communication.

Avantageusement, le procédé de gestion de communication comporte une détection d'une communication en cours utilisant l'identifiant unique de communication.

Ainsi, l'invention permet de détecter une situation de communications croisées même lorsque la gestion de communication ne limite pas le nombre de communication ou session de communication identifiée par un même identifiant unique de communication à une seule.

Avantageusement, le procédé de gestion de communication comporte une notification d'un dispositif de communication parmi le dispositif de communication associé au premier utilisateur et le dispositif de communication associé au deuxième utilisateur d'une situation de communications croisées.

Ainsi, l'invention permet au dispositif de communication lui-même ou à un utilisateur informé par le dispositif de communication (notamment, lors d'un dépôt ou une consultation de message, une messagerie vocale informe de l'appel croisé) de choisir entre la communication en cours et la communication entrante.

Avantageusement, le procédé de gestion de communication comporte, lors d'un établissement de la communication suite à la demande de création de communication, une clôture de communication en cours utilisant le même identifiant unique de communication.

Ainsi, l'utilisateur n'a plus à gérer les deux communications mais une seule. Le risque que la communication en cours soit mise en attente de manière involontaire n'existe plus. Lorsque l'utilisateur était en communication avec une messagerie vocale pour le dépôt d'un message, il ne met plus la messagerie vocale en attente et il n'y a donc plus d'enregistrement de la musique d'attente.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de gestion de communication et étant conçus pour commander l'exécution des différentes étapes de ce procédé.

L'invention vise donc aussi un programme comprenant des instructions de code de programme pour l'exécution des étapes du procédé de gestion de communication lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un autre objet de l'invention est un dispositif de gestion de communication entre des dispositifs de communication, caractérisé en ce que le dispositif de gestion de communication comporte des moyens de demande de création de communication utilisant un identifiant unique de communication identique pour toutes demandes de création de communication entre les mêmes au moins un premier utilisateur et un deuxième utilisateur apte à permettre une communication identifiée par l'identifiant unique de communication, entre au moins un dispositif de communication associé au premier utilisateur et un dispositif de communication associé au deuxième utilisateur.

Un objet de l'invention est également un procédé de communication d'un dispositif de communication comportant une commande d'acceptation de communication suite à une réception d'une requête d'établissement de communication provenant d'un dispositif de gestion de communication comportant un identifiant unique de communication identique pour toutes requête d'établissement de communication du dispositif de gestion de communication entre les mêmes au moins un premier utilisateur et un deuxième utilisateur, la commande d'acceptation étant apte à permettre un établissement d'une communication identifiée par l'identifiant unique de communication, entre au moins le dispositif de communication associé au premier utilisateur et un dispositif de communication associé au deuxième utilisateur.

Avantageusement, le procédé de communication comporte, lors de l'établissement de la communication déclenché par la commande d'acceptation, une clôture de communication en cours utilisant le même identifiant unique de communication entre un dispositif de communication associé au premier utilisateur et un dispositif de communication associé au deuxième utilisateur.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie de... et étant conçus pour commander l'exécution des différentes étapes de ce procédé.

L'invention vise donc aussi un programme comprenant des instructions de code de programme pour l'exécution des étapes du procédé de communication lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est aussi un dispositif de communication comportant des moyens de commande d'acceptation de communication suite à une réception d'une requête d'établissement de communication provenant d'un dispositif de gestion de communication comportant un identifiant unique de communication identique pour toutes requête d'établissement de communication du dispositif de gestion de communication entre les mêmes au moins un premier utilisateur et un deuxième utilisateur, la commande d'acceptation étant apte à permettre un établissement d'une communication identifiée par l'identifiant unique de communication, entre au moins un dispositif de communication associé au premier utilisateur et le dispositif de communication associé au deuxième utilisateur.

Avantageusement, le dispositif de communication comporte des moyens de clôture de communication en cours utilisant le même identifiant unique de communication entre un dispositif de communication associé au premier utilisateur et un dispositif de communication associé au deuxième utilisateur lors de l'établissement de la communication déclenché par la commande d'acceptation.

L'invention a aussi pour objet un dispositif de gestion de messagerie comportant un dispositif de communication et des moyens de notification d'un dispositif de communication en communication avec le disposition de gestion de messagerie d'une situation de communications croisées suite à la réception d'une notification de situation de communications croisés provenant du dispositif de gestion de communication.

Les caractéristiques et avantages de l'invention apparaîtront plus clairement à la lecture de la description, faite à titre d'exemple, et des figures s'y rapportant qui représentent :

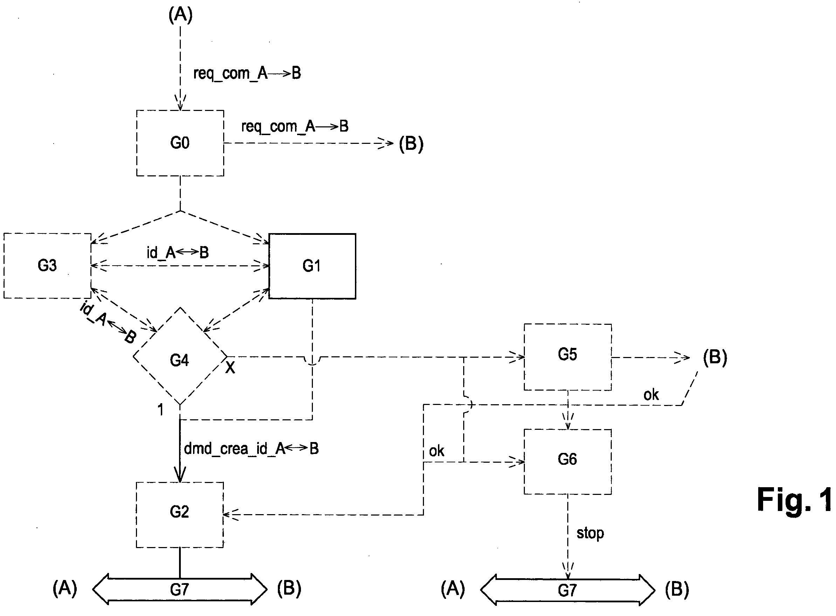

- Figure 1, un schéma simplifié d'un procédé de gestion de communication selon l'invention

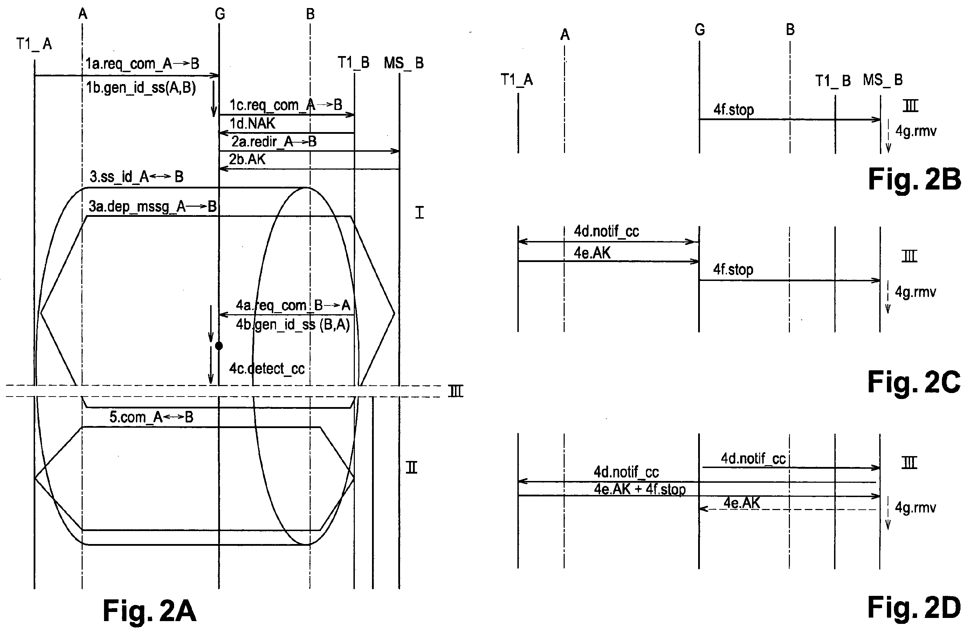

- Figure 2a, un diagramme des échanges lors d'une mise en oeuvre des procédés de gestion de communication et de communication selon l'invention dans une situation de communications croisées où un premier utilisateur A dépose un message vocal à destination d'un deuxième utilisateur B, et Figures 2b, 2c, et 2d des variantes distinctes de l'utilisation de l'information de situation de communications croisées de la figure 2a,

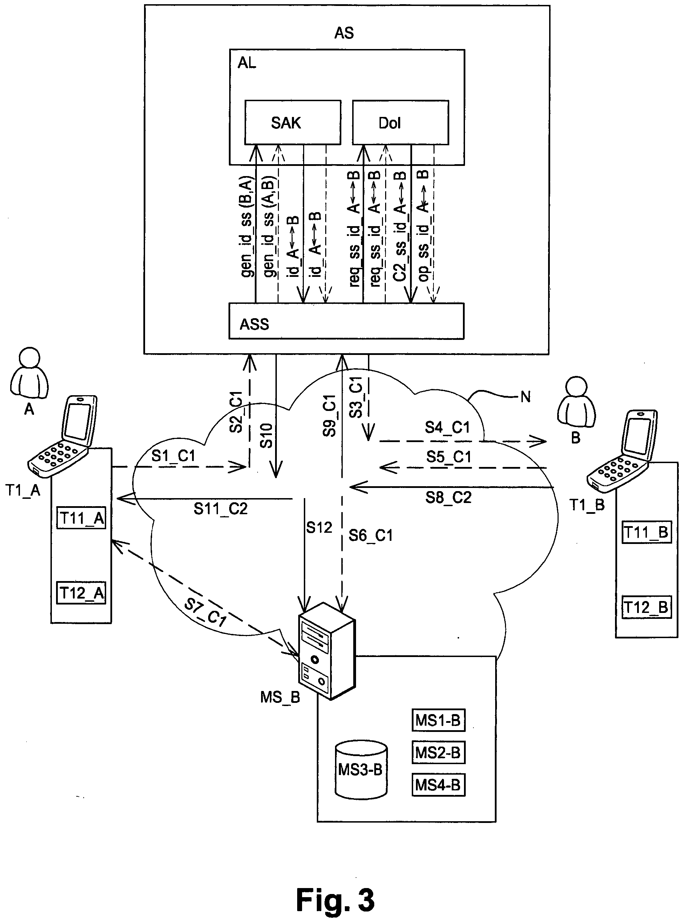

- Figure 3, un schéma simplifiée d'une architecture de communication mettant en oeuvre l'invention dans une situation de communications croisées où un premier utilisateur A dépose un message vocal à destination d'un deuxième utilisateur B,

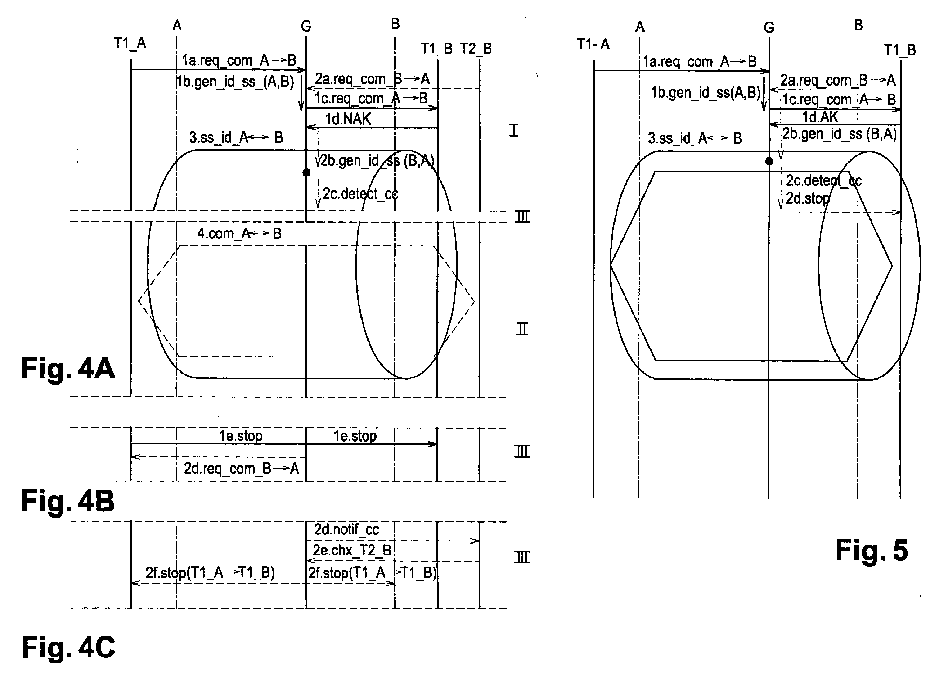

- Figure 4a, un diagramme des échanges lors d'une mise en oeuvre des procédés de gestion de communication et de communication selon l'invention dans une situation de communications croisées où un premier utilisateur A appel un premier terminal d'un deuxième utilisateur B alors que le deuxième utilisateur B utilise son deuxième terminal pour joindre le premier utilisateur A, et Figures 4b, 4c, et 4d des variantes distinctes de l'utilisation de l'information de situation de communications croisées de la figure 4a,
- Figure 5, un diagramme des échanges lors d'une mise en oeuvre des procédés de gestion de communication et de communication selon l'invention dans une situation de communications croisées où un premier utilisateur A appel un terminal d'un deuxième utilisateur B alors que le deuxième utilisateur B utilise, au même moment, ce terminal pour joindre le premier utilisateur A,

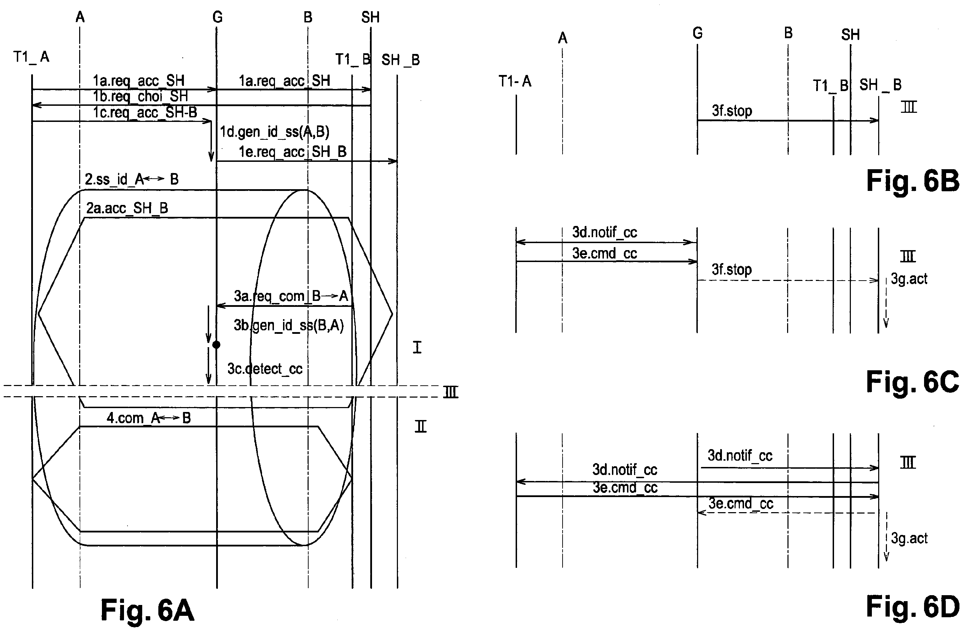

- Figure 6a, un diagramme des échanges lors d'une mise en oeuvre des procédés de gestion de communication et de communication selon l'invention dans une situation de communications croisées où un premier utilisateur A consulte des données mises à disposition par un deuxième utilisateur B alors que le deuxième utilisateur B cherche à joindre le premier utilisateur A, et Figures 6b, 6c, et 6d des variantes distinctes de l'utilisation de l'information de situation de communications croisées de la figure 6a.

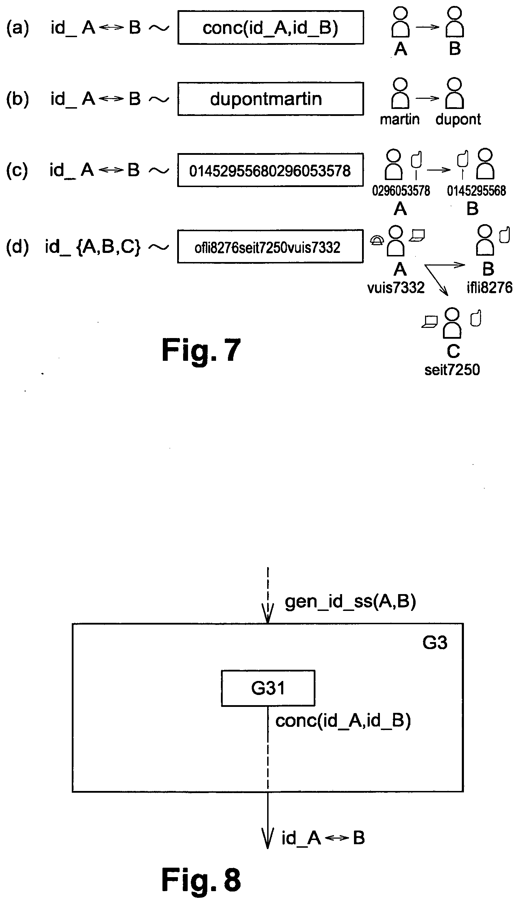

- Figure 7, plusieurs exemples d'identifiants de communication selon un mode de réalisation de l'invention,
- Figure 8, un schéma du procédé de génération d'identifiant de communication selon ce mode de réalisation de l'invention.

Un identifiant unique de communication selon l'invention est un élément permettant d'identifier toutes communications entre les (deux voire plus) mêmes utilisateurs. Ainsi, toutes les communications entre les deux mêmes utilisateurs dans le cas d'une conversation à deux, trois mêmes utilisateurs dans le cas d'une conversation à trois, etc. quelque soit l'utilisateur appelant et quelque soit le moment où la communication est demandée sera identifié avec le même identifiant unique de communication. Par exemple, un appel d'Alice vers Bob et un appel de Bob vers Alice seront tout les deux identifiés pas le même identifiant unique de communication entre Alice et Bob que l'appel d'Alice vers Bob et l'appel de Bob vers Alice soient effectués simultanément ou à plusieurs minutes ou heures d'intervalle, que l'appel d'Alice vers Bob soit encore en cours ou non lorsque l'appel de Bob vers Alice est demandé et inversement.

Par situation de communications croisées, en particulier d'appels croisés, est entendu toute situation impliquant des dispositifs de communications associées aux mêmes utilisateurs tentant d'établir simultanément au moins deux communications entre ces utilisateurs. Une communication pouvant être un appel vocal ou Visio, une communication de type messagerie instantanée, un enregistrement ou une consultation d'un message vocal ou Visio, multimédia, la consultation d'un contenu multimédia...

La figure 1 illustre un schéma simplifié d'un procédé de gestion de communication selon l'invention. Le procédé de gestion de communication entre dispositifs de communication comporte une demande G1 de création de communication fournissant une commande dmd_crea_id_A↔B demandant la création d'une communication et comportant un identifiant unique de communication id_A↔B identique pour toutes demandes de création de communication entre les mêmes au moins un premier utilisateur A et un deuxième utilisateur B apte à permettre un établissement G2 d'une communication G7 identifiée par l'identifiant unique de communication id_A↔B entre au moins un dispositif de communication associé au premier utilisateur A et un dispositif de communication associé au deuxième utilisateur B. Sur la figure 1, les dispositifs de communications utilisés par le premier utilisateur A et le deuxième utilisateur B ne sont pas représentés.

Dans un mode de réalisation particulier de l'invention (non illustré par la figure 1), la demande G1 de création de communication comporte une demande d'ouverture de session de communication entre le premier utilisateur A et le deuxième utilisateur B, la demande d'ouverture de session de communication identifiée par l'identifiant unique de communication id_A↔B.

Dans un mode de réalisation particulier, le procédé de gestion de communication comporte une génération G3 de l'identifiant unique de communication id_A↔B déclenchée par une réception de requête d'établissement G0 de communication entre le premier utilisateur A et le deuxième utilisateur B. La génération G3 d'un identifiant de communication comporte notamment une concaténation (non illustrée) dans un ordre donné d'un identifiant d'un premier utilisateur A et d'un identifiant d'un deuxième utilisateur B

Dans un mode de réalisation particulier, la demande G1 de création de communication comporte le déclenchement par la réception de requête d'établissement G0 de communication de la génération G3 de l'identifiant unique de communication id_A↔B.

Dans un mode de réalisation particulier, le procédé de gestion de communication comporte une détection G4 d'une communication en cours utilisant l'identifiant unique de communication id_A↔B.

Dans un mode de réalisation particulier, la détection G4 comporte la réception de l'identifiant unique de communication id_A↔B provenant de la génération G3 afin de vérifier si une communication existante en cours est identifiée par cet identifiant unique de communication id_A↔B.

La détection G4 est déclenchée, de manière alternative, par la demande de création G1 pour vérifier si une communication existante en cours est identifiée par l'identifiant unique de communication id_A↔B utilisé par la demande de création G4.

Dans un mode de réalisation particulier non illustré, lorsqu'une seule communication peut être identifiée par le même identifiant unique de communication id_A↔B, lors du traitement G2 de la demande de la création de communication dmd_crea_id_A↔B avec l'identifiant unique de communication id_A↔B, un conflit est constaté avec au moins une communication G'7 en cours comportant déjà cet identifiant unique de communication id_A↔B id_A↔B correspond à une situation X de communication en cours utilisant l'identifiant unique de communication id_A↔B.

Suite à la détection G4 ou dans le mode précédent au traitement G2, deux situations sont possibles :
- 1 : la communication demandée par la demande G1 de création de communication est la première a utilisée l'identifiant unique de communication id_A↔B,
- X : il existe déjà au moins une communication en cours utilisant l'identifiant unique de communication id_A↔B de la demande G1 de création de communication,

Dans un mode de réalisation particulier, le procédé de gestion de communication comporte une notification G5 d'un dispositif de communication parmi le dispositif de communication associé au premier utilisateur A et le dispositif de communication associé au deuxième utilisateur B d'une situation X de communications croisées.

Dans un mode de réalisation particulier, le procédé de gestion de communication comporte, lors d'un établissement de la communication G7 suite à la demande G1 de création de communication, une clôture G6 de communication en cours utilisant le même identifiant unique de communication id_A↔B G'7 par une commande de clôture stop.

Dans un mode de réalisation particulier, le procédé de gestion de communication comporte la réception (non illustrée) d'une commande d'acceptation OK du dispositif de communication ayant été notifié G5 de la situation de communications croisées. La réception de la commande d'acception déclenche non seulement la création G2 de la communication demandée mais aussi la clôture de la communication en cours G'7, notamment lorsque la communication en cours concerne un appel vocal ou Visio, le dépôt ou la consultation d'un message vocal ou Visio.

Dans un mode de réalisation particulier, le procédé de gestion de communication comporte la réception (non illustrée) d'une commande de cohabitation de communications (non illustrée) apte à permettre le maintien de la communication en cours G'7 et la création G2 de la communication demandée (notamment une consultation en cours de contenu multimédia et un appel voix ou Visio).

Un objet de l'invention est identifiant de communication, généré par concaténation dans un ordre donné d'identifiants associés à des utilisateurs, est apte à permettre d'identifier toutes communications établies entre au moins lesdits utilisateurs.

Ainsi, les données permettant d'identifier une mise en relation entre deux utilisateurs peuvent être réduites à un identifiant de communication. L'invention permet d'identifier une mise en relation entre utilisateurs quels que soient les dispositifs de communication utilisés par les utilisateurs dans cette mise en relation. En outre, l'invention permet, sans stockage de cet identifiant de détecter des situations de communications croisées à savoir que deux utilisateurs tentent simultanément de joindre l'autre des deux utilisateurs.

Un objet de l'invention est également un procédé de génération d'un identifiant de communication, caractérisé en ce que le procédé de génération d'un identifiant de communication comporte une concaténation dans un ordre donné d'identifiants associés à des utilisateurs, la concaténation permettant d'obtenir l'identifiant de communication apte à permettre d'identifier toutes communications établies entre au moins lesdits utilisateurs.

Avantageusement, au moins un des identifiants associés aux utilisateurs est un numéro d'un téléphone associé à un des utilisateurs, le téléphone étant utilisé pour mettre en communication ledit utilisateur.

Ainsi, l'identification de communication permet d'identifier les communications téléphoniques des utilisateurs.

Avantageusement, l'ordre donné est un ordre croissant.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de génération d'identifiant de communication et étant conçus pour commander l'exécution des différentes étapes de ce procédé.

L'invention vise donc aussi un programme comprenant des instructions de code de programme pour l'exécution des étapes du procédé de génération d'un identifiant de communication lorsque ledit programme est exécuté par un processeur.

Un autre objet de l'invention est un dispositif de génération comportant des moyens de concaténation dans un ordre donné d'identifiants associés à des utilisateurs, la concaténation permettant d'obtenir l'identifiant de communication apte à permettre d'identifier toutes communications établies entre au moins lesdits utilisateurs.

Un objet de l'invention est un procédé de gestion de communication comporte :
- une génération d'un identifiant de communication par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la génération étant déclenchée par une réception de requête d'établissement de communication entre le premier utilisateur et le deuxième utilisateur,
- une demande de création de communication comportant l'identifiant de communication identique pour toutes demandes de création de communication entre les mêmes au moins un premier utilisateur et un deuxième utilisateur apte à permettre un établissement d'une communication identifiée par l'identifiant de communication, entre au moins un dispositif de communication associé au premier utilisateur et un dispositif de communication associé au deuxième utilisateur.

L'invention vise aussi un programme comprenant des instructions de code de programme pour l'exécution des étapes du procédé de gestion de communication illustré par la figure 1 lorsque ledit programme est exécuté par un processeur.

La figure 2a illustre un diagramme des échanges lors d'une mise en oeuvre d'un procédé de gestion de communication selon l'invention dans une situation de communications croisées où un premier utilisateur A dépose un message vocal à destination d'un deuxième utilisateur B.

Un premier utilisateur A dispose d'un dispositif de communication : un terminal T1_A, tel que notamment un téléphone mobile. Un deuxième utilisateur B dispose de deux dispositifs de communication : un terminal T1_B, tel qu'un téléphone mobile, et un dispositif de messagerie vocale MS_B associé au téléphone mobile T1_B.

Le premier utilisateur A cherche à joindre au moyen de son téléphone mobile T1_A le deuxième utilisateur B sur son téléphone mobile T1_B. Le téléphone mobile T1_A du premier utilisateur A émet vers un dispositif de gestion de communication G une requête d'établissement de communication *1a. req_com_A→B* du téléphone mobile T1_A du premier utilisateur A vers le téléphone mobile T1_B du deuxième utilisateur B.

Le dispositif de gestion de communication G génère un identifiant unique de communication id_A↔B *1b. gen*_*id*_*ss(A,B)* fonction de l'appelant, en l'occurrence le premier utilisateur A, et de l'appelé, en l'occurrence le deuxième utilisateur B. Dans le cas particulier de la figure 2a, la génération de l'identifiant unique de communication id_A↔B est fonction du dispositif de communication appelant, en l'occurrence le téléphone mobile T1_A. et du dispositif de communication appelé, en l'occurrence le téléphone mobile T1_B.

Le dispositif de gestion de communication G transmet la requête d'établissement de communication *1c. req_com_A→B* au dispositif de communication appelé, en l'occurrence le téléphone mobile T1_B du deuxième utilisateur B. L'utilisateur B n'étant pas disponible, il ne répond pas à l'appel. Le téléphone mobile T1_B émet alors en réponse à la requête d'établissement de communication une commande d'acceptation de valeur négative *1d. NAK* vers le dispositif de gestion de communication G.

Un dispositif de messagerie vocale MS_B étant associé au téléphone mobile T1_B du deuxième utilisateur B, la requête d'établissement de communication est redirigé vers ce dispositif de messagerie vocale MS_B, notamment directement par le téléphone mobile T1_B ou par le dispositif de gestion de communication G.

La figure 2a illustre cette deuxième option. Le dispositif de gestion de communication G recevant la commande d'acceptation de valeur négative *1d. NAK* redirige *2a. redir_A*→*B* la requête d'établissement de communication vers le dispositif de messagerie vocale MS_B associé au téléphone mobile T1_B du deuxième utilisateur B.

Dans un mode de réalisation particulier, le dispositif de messagerie vocale MS_B émet alors en réponse à la requête d'établissement de communication une commande d'acceptation de valeur positive *2b. OK* vers le dispositif de gestion de communication G permettant l'établissement de la communication entre l'utilisateur A et l'utilisateur B, en l'occurrence du téléphone mobile T1_A et le dispositif de messagerie vocale MS_B, identifiée par l'identifiant unique de communication id_A↔B.

Dans un mode de réalisation particulier illustré par la figure 2a, une session de communication *3*. *ss_id_A*↔*B* est ouverte entre le téléphone mobile T1_A du premier utilisateur A et le dispositif de messagerie vocale MS_B du deuxième utilisateur B. Durant cette session, le premier utilisateur A effectue, notamment, le dépôt d'un message vocal *3a. dep_mssg_A*→*B* à destination du deuxième utilisateur B.

Alors que le premier utilisateur A est en train de déposer un message vocal, notamment d'enregistrer un messager vocal ou de transmettre un message vocal préenregistrer sur son téléphone mobile T1_A, à destination du deuxième utilisateur B, le deuxième utilisateur B, alors à nouveau disponible, lit, sur son téléphone mobile T1_B, la notification d'appel en absence indiquant que le premier utilisateur A vient de tenter de le joindre et appuie sur la touche de rappel automatique. Le téléphone mobile T1_B du deuxième utilisateur B.

Le téléphone mobile T1_B du deuxième utilisateur B émet vers un dispositif de gestion de communication G une requête d'établissement de communication *4a*. *req_com_B→A* du téléphone mobile T1_B du deuxième utilisateur B vers le téléphone mobile T1_A du premier utilisateur A.

Le dispositif de gestion de communication G génère un identifiant unique de communication id_A↔B *4b. gen_id_ss(B,C)* fonction de l'appelant, en l'occurrence le deuxième utilisateur B, et de l'appelé, en l'occurrence le premier utilisateur A. Dans le cas particulier de la figure 2a, la génération de l'identifiant unique de communication id_A↔B est fonction du dispositif de communication appelant, en l'occurrence le téléphone mobile T1_B, et du dispositif de communication appelé, en l'occurrence le téléphone mobile T1_A.

Le dispositif de gestion de communication G tente d'établir la communication avec le téléphone mobile T1_A du premier utilisateur A en tentant d'ouvrir une session de communication identifiée par l'identifiant unique de communication id_A↔B ainsi généré. Une session de communication *3.ss_id_A*↔*B* identifié par cet identifiant unique de communication id_A↔B existant déjà, l'ouverture de la session de communication ne peut être effectuée et une situation de communication croisées est ainsi détectée *4c. detect_cc* par le dispositif de gestion de communication G.

Plusieurs options sont alors possibles :
- soit le dispositif de gestion de communication G gère seul la situation de communications croisées comme le montre les figure 2a et 2b ;
- soit le dispositif de gestion de communication permet au premier utilisateur A de choisir de continuer à enregistrer son message ou prendre la communication entrante comme le montre la figure 2c, notamment lorsque le premier utilisateur A dispose d'un service de double appel;
- soit le dispositif de gestion de communication permet au dispositif de messagerie vocal de gérer la situation de communication croisés comme le montre la figure 2d, notamment lorsque le premier utilisateur A ne dispose pas d'un service de double appel.

La figure 2a illustre un dispositif de gestion d'appel G mettant fin à la communication *3a. dep_mssg_A→B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b. com_A*↔*B* dans la session de communication *3.ss_id_A*↔*B.*

La figure 2b illustre un dispositif de gestion d'appel G mettant fin à la communication *3a. dep_mssg_A*↔*B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b. com_A*↔*B* dans la session de communication *3.ss_id_A*↔*B* en envoyant à destination du dispositif de messagerie vocale MS_B une commande de clôture *4f. stop.* Dans un mode de réalisation particulier, le dispositif de messagerie vocale MS_B ne stockera pas voire effacera le message en cours d'enregistrement *4g. rmv.*

La figure 2c illustre un dispositif de gestion d'appel G notifant 4d. notif_cc le premier utilisateur A, en l'occurrence le téléphone mobile T1_A, d'une situation de communications croisées. Dans un mode de réalisation particulier, cette notification de situation de communication croisées peut être une notification de double appel spécifique, en particulier, lorsque le premier utilisateur A est abonné ou bénéficie d'un service de double appel, à savoir qu'il est notifié de tout appel entrant alors même qu'il est en communication.

Dans un mode de réalisation particulier (non illustré), suite ou en parallèle à cet notification, le dispositif de gestion de communication G met fin à la communication *3a. dep*_*mssg*_*A→B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b*. *com_A*↔B dans la session de communication *3.ss_id_A*↔*B.*

Dans un mode de réalisation particulier illustré par la figure 2c, le premier utilisateur A indique au moyen de son téléphone mobile T1_A au dispositif de gestion de communication G qu'il souhaite prendre l'appel entrant dans la situation de communication croisées notifiée en émettant une commande de prise d'appel en situation de communications croisées, telle que 4c. OK. Le dispositif de gestion d'appel G met alors fin à la communication *3a. dep_mssg_A*→*B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b. com_A*↔*B* dans la session de communication *3.ss_id_A*↔*B* en envoyant à destination du dispositif de messagerie vocale MS_B une commande de clôture *4f. stop.* Dans un mode de réalisation particulier, notamment fonction de la commande de prise d'appel en situation de communications croisées émise par le téléphone mobile T1_A du premier utilisateur A, le dispositif de messagerie vocale MS_B ne stockera pas voire effacera le message en cours d'enregistrement *4g. rmv.*

La figure 2d illustre un dispositif de gestion d'appel G notifiant 4d. notif_cc le dispositif de messagerie vocal MS_B d'une situation de communications croisées.

Dans un mode de réalisation particulier (non illustré), le dispositif de messagerie vocal MS_B informe le premier utilisateur A de la situation de communications croisées *4d. notif_cc,* notamment sur son téléphone mobile T1_A. Puis, le dispositif de messagerie vocale MS_B met fin à la communication *3a. dep_mssg_A*↔*B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b. com_A*↔*B* dans la session de communication *3.ss_id_A*↔*B.*

Dans un mode de réalisation particulier illustré par la figure 2d, le dispositif de messagerie vocale MS_B met fin à la communication *3a. dep_mssg_A*→*B* et donc à l'enregistrement du message par le premier utilisateur A à destination du deuxième utilisateur B pour privilégier l'appel vocal ou Visio du deuxième utilisateur B à destination du premier utilisateur A en établissant la communication *3b. com_A*↔*B* dans la session de communication *3.ss_id_A*↔*B.* Dans un mode de réalisation particulier, le dispositif de messagerie vocale MS_B ne stockera pas voire effacera le message en cours d'enregistrement *4g. rmv.*

Dans un mode de réalisation particulier illustré par la figure 2d, le dispositif de messagerie vocal MS_B informe le premier utilisateur A de la situation de communications croisées *4d. notif_cc,* notamment sur son téléphone mobile T1_A. Le premier utilisateur A indique au moyen de son téléphone mobile T1_A au dispositif de messagerie vocal MS_B qu'il souhaite prendre l'appel entrant dans la situation de communication croisées notifiée en émettant une commande de prise d'appel en situation de communications croisées, telle que 4e. OK. Le dispositif de messagerie vocal MS_B met alors fin à la communication *3a. dep_mssg_A*→*B* et donc à l'enregistrement du message par le premier utilisateur A à destination du deuxième utilisateur B pour privilégier l'appel vocal ou Visio du deuxième utilisateur B à destination du premier utilisateur A en établissant la communication 3b. *com_A*↔*B* dans la session de communication *3.ss_id_A*↔*B*, notamment par une commande *4e. OK* à destination du dispositif de gestion de communication G. Dans un mode de réalisation particulier, notamment fonction de la commande de prise d'appel en situation de communications croisées émise par le téléphone mobile T1_A du premier utilisateur A, le dispositif de messagerie vocale MS_B ne stockera pas voire effacera le message en cours d'enregistrement *4g. rmv.*

L'invention a en outre pour objet un procédé de communication d'un dispositif de communication comportant une commande d'acceptation de communication suite à une réception d'une requête d'établissement de communication provenant d'un dispositif de gestion de communication, la requête d'établissement comportant un identifiant de communication identique pour toutes requête d'établissement de communication du dispositif de gestion de communication entre les mêmes au moins un premier utilisateur et un deuxième utilisateur, l'identifiant de communication ayant été généré par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la commande d'acceptation étant apte à permettre un établissement d'une communication identifiée par l'identifiant de communication, entre au moins le dispositif de communication associé au premier utilisateur et un dispositif de communication associé au deuxième utilisateur.

La figure 3 montre un schéma simplifié d'une architecture de communication mettant en oeuvre l'invention dans une situation de communications croisées où un utilisateur A dépose un message vocal à destination d'un utilisateur B.

La figure 3 montre des dispositifs de communication T1_A d'un utilisateur A et T1_B et MS_B d'un utilisateur B. Les dispositifs de communication T1_A, T1_B et MS_B comportent des moyens de commande, respectivement T11_A, T11_B et MS1_B, d'acceptation de communication suite à une réception d'une requête d'établissement de communication provenant d'un dispositif de gestion de communication G comportant un identifiant unique de communication id_A↔B identique pour toutes requête d'établissement de communication du dispositif de gestion de communication G entre les mêmes au moins un premier utilisateur, respectivement A et B, et un deuxième utilisateur, respectivement B et A, la commande d'acceptation étant apte à permettre un établissement d'une communication identifiée par l'identifiant unique de communication id_A↔B, entre au moins le dispositif de communication, respectivement T1_A et T1_B, associé au premier utilisateur et du dispositif de communication, respectivement T1_B et T1_A, associé au deuxième utilisateur.

En particulier, l'identifiant de communication id_A↔B est un identifiant généré par concaténation dans un ordre donné d'identifiants associés à ces utilisateurs A et B apte à permettre d'identifier toutes communications établies entre au moins lesdits utilisateurs A et B.

Dans un mode de réalisation particulier, le dispositif de communication MS_B comporte des moyens de clôture MS2_B de communication en cours utilisant le même identifiant unique de communication id_A↔B entre un dispositif de communication associé au premier utilisateur, respectivement A et B, et un dispositif de communication associé au deuxième utilisateur, respectivement B et A, lors de l'établissement de la communication déclenché par la commande d'acceptation.

La figure 3 montre un dispositif de gestion de communication G entre des dispositifs de communication, notamment un téléphone mobile T1_A d'un utilisateur A et un téléphone mobile T1_B d'un utilisateur B comportant des moyens de demande de création de communication ASS utilisant un identifiant unique de communication id_A↔B identique pour toutes demandes de création de communication entre les mêmes au moins un utilisateur A et un utilisateur B apte à permettre une communication identifiée par l'identifiant unique de communication id_A↔B, entre au moins un dispositif de communication T1_A associé à l'utilisateur A et un dispositif de communication associé à l'utilisateur T1 B.

L'invention peut notamment être mise en oeuvre en se basant sur un serveur d'application G qui implémente des moyens de gestion de communication ASS, tel qu'un serveur d'application SIP, notamment la SIP Servlet API 1.1 définie dans la norme JSR289 comme la figure 3 l'illustre. Les moyens de gestion de communication ASS comporte les moyens de demande de création de communication.

Dans le cas d'un premier appel entre un utilisateur A, Alice par exemple, appelé aussi le premier utilisateur de ce premier appel, et un deuxième utilisateur B, Bob par exemple, appelé aussi le deuxième utilisateur de ce premier appel :

Le téléphone mobile T1_A du premier utilisateur A, Alice, émet une requête d'établissement de communication S1_C1 vers le réseau qui la distribue S2_C1 au dispositif de gestion de communication G. En particulier, le téléphone mobile T1_A émet une requête d'établissement de communication selon le protocole SIP : requête « INVITE » vers le serveur d'application G, en particulier vers les moyens de gestion de communication ASS.

Le dispositif de gestion de communication G crée une communication, notamment établit un appel SIP en mode « Back-To-Back» vers le deuxième B, utilisant un identifiant unique de communication id_A↔B qui permet au dispositif de gestion de communication de détecter une situation de double appel spécifique : une situation de communications croisées. En particulier, les moyens de gestion de communication ASS demande, notamment à des moyens de création de communication Dol, la création d'une communication *req_ss_id_A*↔*B*, par exemple sous la forme d'une commande SIP du type « SIP App Session Id A&B » permettant de crée une nouvelle session de communication SIP « SipApplicationSession », utilisant l'identifiant unique de communication id_A↔B. Dans le cas de l'utilisation du protocole SIP, la session de communication SIP « SipApplicationSession » comporte toutes les informations concernant la communication initié par la requête « INVITE », notamment l'identifiant unique de communication id_A↔B, dans le champ d'identification de la session «SipApplicationSession Id ».

Ainsi, le dispositif de gestion de communication G, en particulier les moyens de création de communication Dol, sont forcés à utiliser la même communication, notamment la même session de communication sous la forme, en particulier du même objet « SipApplicationSession », pour chaque communication concernant ces deux utilisateurs A et B, Alice et Bob.

Dans un mode de réalisation particulier, le dispositif de gestion de communication G, notamment un serveur d'application tel que celui indiqué ci-dessus, comporte des moyens de génération SAK de l'identifiant unique de communication id_A↔B. Notamment, la requête de demande d'établissement de communication d'un dispositif de communication T1_A au le dispositif de gestion de communication G est transmise, dans le cas de ce premier appel : gen_id_ss(A,B) formulée sous la forme d'une requête « INVITE » lors de l'utilisation du protocole SIP, par les moyens de gestion de communication ASS aux moyens de génération SAK qui utilise les informations contenus dans la requête d'établissement de communication pour générer l'identifiant unique de communication id_A↔B.

En particulier, les moyens de génération SAK d'un identifiant de communication comporte des moyens de concaténation CN dans un ordre donné d'identifiants associés à un premier utilisateur et un deuxième utilisateur, les moyens de concaténation permettant d'obtenir l'identifiant de communication apte à permettre d'identifier toutes communications établies entre au le premier utilisateur et le deuxième utilisateur, les moyens de génération étant déclenchés par une réception de requête d'établissement de communication entre le premier utilisateur et le deuxième utilisateur.

Dans le cas d'une implémentation du dispositif de gestion de communication G en utilisant le Servlet défini dans la norme JSR289, une implémentation des moyens de génération SAK comporte des moyens d'exécution d'une méthode statique formulé en java « @SipApplicationKey » dont un squelette pourrait être : 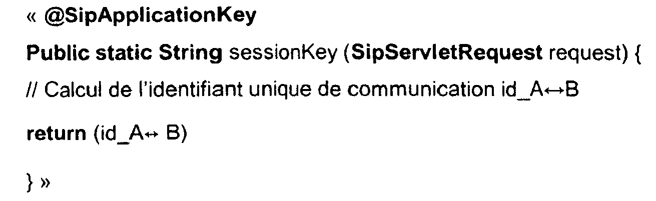 Ou, autre exemple : 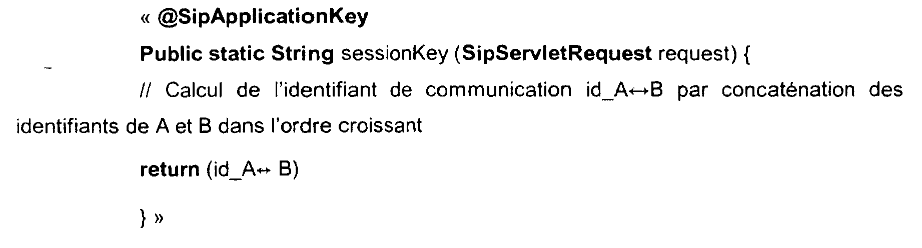 Cette méthode statique permet de définir de manière statique un identifiant pour une communication entre deux utilisateurs. Par conséquence, pour une communication ultérieure entre les deux mêmes utilisateurs, la méthode statique générera le même identifiant unique de communication id_A↔B. Lors de la demande de création de communication par les moyens de gestion de communication ASS aux moyens de création de communication Dol, l'identifiant de la communication sera l'identifiant unique de communication id_A↔B renvoyé par les moyens de génération SAK.

Dans le cas de ce premier appel d'Alice vers Bob, les moyens de création de communication Dol commande aux moyens de gestion de communication ASS l'ouverture d'une session de communication op_ss_id_A↔B identifiée par l'identifiant unique de communication id_A↔B pour établir l'appel. Le dispositif de gestion de communication G, en particulier les moyens de gestion de communication ASS, transmette S3_C1 via le réseau de communication qui relaie S4_C1 le premier appel d'Alice vers Bob, en particulier, vers son téléphone mobile T1_B. Bob ne répond pas S5_C1. Le premier appel est redirigé S6_C1, notamment par le dispositif de gestion de communication G ou un autre dispositif (non illustré) du réseau de communication, vers un dispositif de messagerie vocale MS_B.

Le premier appel est alors établi S7_C1 entre le téléphone mobile d'Alice T1_A et le dispositif de messagerie vocale associé à Bob MS_B. Ce premier appel est identifié par l'identifiant unique de communication id_A↔B entre Alice et Bob id_A↔B. Le dispositif de messagerie vocale MS_B permet l'enregistrement par Alice d'un message à destination de Bob qui sera, par exemple, stocké dans des moyens de mémorisation MS3_B.

### Dans le cas d'un deuxième appel entre Alice et Bob :

Le téléphone mobile de Bob T1_B requiert un établissement de communication S8_C2 avec Alice qui est relayé S9_C2 par le réseau de communication vers le dispositif de gestion de communication G. Le dispositif de gestion de communication demande la création d'une communication d'un premier utilisateur de ce deuxième appel, en l'occurrence l'utilisateur B pour Bob, vers un deuxième utilisateur de ce deuxième appel, en l'occurance l'utilisateur A pour Alice, avec l'identifiant unique de communication id_A↔B affecté à Alice et Bob donc identique à celui associé au premier appel d'Alice vers Bob id_A↔B. En particulier, les moyens de gestion de communication ASS du dispositif de gestion de communication G reçoivent la requête d'établissement du deuxième appel S9_C2 et demandent cette création de communication req_ss_idA↔B aux moyens de création de communication Dol.

Dans le mode de réalisation particulier où le dispositif de gestion de communication G comporte des moyens de génération SAK, les moyens de génération SAK génère l'identifiant unique de communication id_A↔B sur demande gen_id_ss(B,A) des moyens de gestion de communication ASS, notamment grâce aux moyens de concaténation CN.

Si le premier appel est encore en cours, les moyens de création de communication Dol ne peuvent pas créer une nouvelle session de communication entre Alice et Bob, puisqu'une session de communication comportant l'identifiant unique de communication id_A↔B entre Alice et Bob id_A↔B existe déjà : une session de communication entre Alice et Bob est en cours, il s'agit du premier appel - Alice est en train de déposer un message vocal pour Bob.

Dans un mode de réalisation particulier où Alice ne dispose pas d'un service de double appel et dans lequel les appels vocaux sont prioritaires sur le dépôt de message, le dispositif de gestion de communication envoie une commande S10 via le réseau de communication, notamment relayé par un dispositif de ce réseau de communication, au dispositif de messagerie vocale MS_B pour, dans la session de communication existante entre Alice et Bob, clore le premier appel et établir l'appel vocal de Bob vers Alice soit le deuxième appel. Le téléphone mobile d'Alice T1_A reçoit la requête d'établissement pour le deuxième appel S11_C2 et le dispositif de messagerie vocale MS_B reçoit la commande de clôture S12.

Dans un mode de réalisation particulier, le dispositif de messagerie vocale MS_B dispose de moyens de notification M4_B. Ainsi, si Alice ne dispose pas du service de « double appel », le dispositif de messagerie vocale notifié de la situation de communications croisées par le dispositif de gestion G peut notifier grâce à ces moyens de notification MS4_B Alice de la situation de communications croisées avant de clore le premier appel et d'établir l'appel vocal ou proposer à Alice de choisir si elle souhaite continuer à enregistrer le message vocal et ne pas prendre l'appel de Bob.

L'implémentation de l'invention avec une architecture de type système multimédia IP IMS (IP Multimédia Subsystem) permet d'utiliser aussi bien les téléphones et les réseaux de communication mobiles (tels qu'illustrés par la figure 3) que les téléphones et les réseaux de communication fixe (non illustré).

La figure 4a montre un diagramme des échanges lors d'une mise en oeuvre du procédé de gestion de communication et du procédé de communication selon l'invention dans une situation de communications croisées où un premier utilisateur A appel un premier terminal d'un deuxième utilisateur B alors que le deuxième utilisateur B utilise son deuxième terminal pour joindre le premier utilisateur A.

Un premier utilisateur A dispose d'un dispositif de communication : un terminal T1_A, tel que notamment un téléphone mobile. Un deuxième utilisateur B dispose de deux dispositifs de communication : un terminal T1_B, tel qu'un téléphone fixe, et un terminal T2_B, tel qu'un téléphone mobile.

Le premier utilisateur A cherche à joindre au moyen de son téléphone mobile T1_A le deuxième utilisateur B sur son téléphone fixe T1_B. Le téléphone mobile T1_A du premier utilisateur A émet vers un dispositif de gestion de communication G une requête d'établissement de communication *1a. req_com_A*→*B* du téléphone mobile T1_A du premier utilisateur A vers le téléphone fixe T1_B du deuxième utilisateur B.

Le dispositif de gestion de communication G génère un identifiant unique de communication id_A↔B *1b. gen_id_ss(A,B)* fonction de l'appelant, en l'occurrence le premier utilisateur A, et de l'appelé, en l'occurrence le deuxième utilisateur B.

Le dispositif de gestion de communication G transmet la requête d'établissement de communication *1c. req_com_A*→*B* au dispositif de communication appelé, en l'occurrence le téléphone fixe T1_B du deuxième utilisateur B. L'utilisateur B n'étant pas à son domicile, il ne répond pas à l'appel.

Alors que le premier utilisateur A est en train d'essayer de joindre le deuxième utilisateur B sur son téléphone fixe T1_B, le deuxième utilisateur B utilise son téléphone mobile T2_B pour tenter de joindre le premier utilisateur A sur son téléphone mobile T1_A. Le téléphone mobile T1_B du deuxième utilisateur B émet vers un dispositif de gestion de communication G une requête d'établissement de communication *2a. req_com_B→A* du téléphone mobile T1_B du deuxième utilisateur B vers le téléphone mobile T1_A du premier utilisateur A.

Le dispositif de gestion de communication G génère un nouvel identifiant unique de communication id_A↔B *4b. gen_id_ss(B,C)* fonction de l'appelant, en l'occurrence le deuxième utilisateur B, et de l'appelé, en l'occurrence le premier utilisateur A. L'identifiant généré étant destiné à identifier une communication entre les mêmes deux premier utilisateur A et deuxième utilisateur B, il est identique au précédent identifiant unique de communication id_A↔B généré suite à la demande de communication du premier utilisateur A vers le deuxième utilisateur B.

Le dispositif de gestion de communication G tente d'établir la communication avec le téléphone mobile T1_A du premier utilisateur A en tentant d'ouvrir une session de communication identifiée par l'identifiant unique de communication id_A↔B ainsi généré. Une session de communication *3.ss_id_A*↔*B* identifié par cet identifiant unique de communication id_A↔B existant déjà, l'ouverture de la session de communication ne peut être effectuée et une situation de communication croisées est ainsi détectée *2c*. *detect_cc* par le dispositif de gestion de communication G.

Plusieurs options sont alors possibles :
- soit le dispositif de gestion de communication G gère seul la situation de communications croisées comme le montre les figure 4a et 4b ;
- soit le dispositif de gestion de communication permet à l'utilisateur dont plusieurs dispositif de communication sont mis en jeu, en l'occurrence au deuxième utilisateur B, de choisir entre prendre la communication entrante sur son téléphone fixe ou opter pour la communication sur son téléphone mobile comme le montre la figure 2c.
L'invention a également pour objet un dispositif de gestion de communication entre dispositifs de communication comportant :
- Des moyens de génération d'un identifiant de communication comportant des moyens de concaténation dans un ordre donné d'identifiants associés à un premier utilisateur et un deuxième utilisateur, les moyens de concaténation permettant d'obtenir l'identifiant de communication apte à permettre d'identifier toutes communications établies entre au le premier utilisateur et le deuxième utilisateur, les moyens de génération étant déclenchés par une réception de requête d'établissement de communication entre le premier utilisateur et le deuxième utilisateur,
- Des moyens de demande de création de communication comportant l'identifiant de communication identique pour toutes demandes de création de communication entre les mêmes au moins un premier utilisateur et un deuxième utilisateur apte à permettre un établissement d'une communication identifiée par l'identifiant de communication, entre au moins un dispositif de communication associé au premier utilisateur et un dispositif de communication associé au deuxième utilisateur.

L'invention a aussi pour objet un dispositif de communication comportant des moyens de commande d'acceptation de communication suite à une réception d'une requête d'établissement de communication provenant d'un dispositif de gestion de communication, la requête d'établissement comportant un identifiant de communication identique pour toutes requête d'établissement de communication du dispositif de gestion de communication entre les mêmes au moins un premier utilisateur et un deuxième utilisateur, l'identifiant de communication ayant été généré par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la commande d'acceptation étant apte à permettre un établissement d'une communication identifiée par l'identifiant de communication, entre au moins le dispositif de communication associé au premier utilisateur et un dispositif de communication associé au deuxième utilisateur.

La figure 4a illustre un dispositif de gestion d'appel G mettant fin à la tentative d'établissement de communication du téléphone mobile T1_A vers le téléphone fixe T1_B pour privilégier l'appel émis par le deuxième utilisateur B dont plusieurs dispositifs de communication sont mis en jeu en établissant la communication 4. *com_A*↔*B* dans la session de communication *3.ss_id_A*↔*B.*

La figure 4b illustre un dispositif de gestion d'appel G mettant fin à la tentative d'établissement de communication du téléphone mobile T1_A vers le téléphone fixe T1_B en envoyant à destination du téléphone mobile T1_A et du téléphone fixe T1_B une commande de clôture *1e. stop.* Le dispositif de gestion de communication transmet *2d. req_com_B→A* la requête d'établissement de communication provenant du téléphone mobile T2_B du deuxième utilisateur B au téléphone mobile du premier utilisateur A T1_A.

La figure 4c illustre un dispositif de gestion d'appel G notifant 2d. notif_cc le deuxième utilisateur B, en l'occurrence le téléphone mobile T2_B, d'une situation de communications croisées.

Dans un mode de réalisation particulier (non illustré), suite ou en parallèle à cet notification, le dispositif de gestion de communication G met fin à la tentative de communication pour privilégier l'appel du deuxième utilisateur B ayant plusieurs dispositif de communication en cours à destination du premier utilisateur A en établissant la communication *4*. *com_A*↔*B* dans la session de communication *3.ss_id_A*↔*B.*

Dans un mode de réalisation particulier illustré par la figure 4c, le deuxième utilisateur B indique au moyen de son téléphone mobile T2_B au dispositif de gestion de communication G qu'il souhaite poursuivre l'appel émis par son téléphone mobile T2_B en émettant une commande de choix d'appel en situation de communications croisées, telle que 2e. chx_T2_B. Le dispositif de gestion d'appel G met alors fin à la tentative de pour l'appel du deuxième utilisateur B ayant plusieurs dispositif de communication en cours à destination du premier utilisateur A en établissant la communication *4*. *com_A*↔*B* dans la session de communication *3.ss_id_A*↔*B.*

Dans une variante de l'invention, deux communications concernant un même utilisateur, en l'occurrence le même deuxième utilisateur B, sont identifiées notamment par l'appartenance des dispositifs de communication concernés par les communications à une même communauté de dispositifs de communication associée à cet utilisateur.

Dans une alternative à cette variante, deux communications concernant un même utilisateur, en l'occurrence le même deuxième utilisateur B, sont identifiées parce que les deux communications comportent outre l'identifiant des dispositifs de communication des identifiants d'utilisateur associé à ces dispositifs de communications.

La figure 5 montre un diagramme des échanges lors d'une mise en oeuvre des procédés de gestion de communication et de communication selon l'invention dans une situation de communications croisées où un premier utilisateur A appel un terminal d'un deuxième utilisateur B alors que le deuxième utilisateur B utilise, au même moment, ce terminal pour joindre le premier utilisateur A.

Un premier utilisateur A dispose d'un dispositif de communication : un terminal T1_A, tel que notamment un téléphone mobile. Un deuxième utilisateur B dispose d'un dispositif de communication : un terminal T1_B, tel qu'un téléphone fixe.

Le premier utilisateur A cherche à joindre au moyen de son téléphone mobile T1_A le deuxième utilisateur B sur son téléphone fixe T1_B. Le téléphone mobile T1_A du premier utilisateur A émet vers un dispositif de gestion de communication G une requête d'établissement de communication *1a. req_com_A→B* du téléphone mobile T1_A du premier utilisateur A vers le téléphone fixe T1_B du deuxième utilisateur B.

Le dispositif de gestion de communication G génère un identifiant unique de communication id_A↔B *1b. gen_id_ss(A,B)* fonction de l'appelant, en l'occurrence le premier utilisateur A, et de l'appelé, en l'occurrence le deuxième utilisateur B.

Le dispositif de gestion de communication G transmet la requête d'établissement de communication *1c. req_com_A→B* au dispositif de communication appelé, en l'occurrence le téléphone fixe T1_B du deuxième utilisateur B.

Avant que le téléphone fixe T1_B du deuxième utilisateur B ne signale notamment par une sonnerie l'appel entrant au deuxième utilisateur B, le deuxième utilisateur B utilise ce même téléphone fixe T1_B pour tenter de joindre le premier utilisateur A sur son téléphone mobile T1_A. Le téléphone fixe T1_B du deuxième utilisateur B émet vers un dispositif de gestion de communication G une requête d'établissement de communication *2a. req_com_B*→*A* du téléphone fixe T1_B du deuxième utilisateur B vers le téléphone mobile T1_A du premier utilisateur A.

Le dispositif de gestion de communication G génère un nouvel identifiant unique de communication id_A↔B *1b. gen_id_ss(B,C)* fonction de l'appelant, en l'occurrence le deuxième utilisateur B, et de l'appelé, en l'occurrence le premier utilisateur A. L'identifiant généré étant destiné à identifier une communication entre les mêmes deux premier utilisateur A et deuxième utilisateur B, il est identique au précédent identifiant unique de communication id_A↔B généré suite à la demande de communication du premier utilisateur A vers le deuxième utilisateur B.

Le dispositif de gestion de communication G tente d'établir la communication vers le téléphone mobile T1_A du premier utilisateur A en tentant d'ouvrir une session de communication identifiée par l'identifiant unique de communication id_A↔B ainsi généré. Une session de communication *3.ss_id_A↔B* identifié par cet identifiant unique de communication id_A↔B existant déjà, l'ouverture de la session de communication ne peut être effectuée et une situation de communication croisées est ainsi détectée *2c. detect_cc* par le dispositif de gestion de communication G.

Plusieurs options sont alors possibles dont le fait que le dispositif de gestion de communication G gère seul la situation de communications croisées comme le montre la figure 5. Le dispositif de gestion d'appel G met fin à l'une des tentatives d'établissement de communication entre le téléphone mobile T1_A et le téléphone fixe T1_B, par exemple l'établissement d'appel correspondant à la deuxième requête dans le temps provenant du téléphone fixe T1_B du deuxième utilisateur pour permettre l'établissement de la communication requise par le premier utilisateur A soit sur acceptation de la communication par le deuxième utilisateur B soit par établissement automatique de la communication par le dispositif de gestion de communication G sans acceptation par le deuxième utilisateur B (la requête d'établissement de communication provenant du deuxième utilisateur B est alors considéré comme ayant valeur de commande d'acceptation à la requête d'établissement de communication du premier utilisateur A) en établissant la communication dans la session de communication *3.ss_id_A↔B.*

La figure 6a montre un diagramme des échanges lors d'une mise en oeuvre des procédés de gestion de communication et.de communication selon l'invention dans une situation de communications croisées où un premier utilisateur. A consulte des données mises à disposition par un deuxième utilisateur B alors que le deuxième utilisateur B cherche à joindre le premier utilisateur A.

Un premier utilisateur A dispose d'un dispositif de communication : un terminal T1_A, tel que notamment un téléphone mobile. Un deuxième utilisateur B dispose de deux dispositifs de communication : un terminal T1_B, tel qu'un téléphone mobile, et un dispositif de partage SH_B dans un dispositif ou système de partage SH tel qu'une messagerie vocale ou un dispositif de partage de contenu multimédia. Dans le cas d'une messagerie vocale, le dispositif de partage SH_B correspond aux moyens de lecture des messages de la messagerie vocale SH et à un espace de stockage dédié à au moins un message du deuxième utilisateur B à destination du premier utilisateur A.

Le premier utilisateur A cherche à consulter au moyen de son téléphone mobile T1_A des éléments (messages, contenus multimédia...) mis à disposition sur un système de partage SH. Le téléphone mobile T1_A du premier utilisateur A émet vers un dispositif de gestion de communication G une requête de consultation *1a. req_acc_SH* du téléphone mobile T1_A du premier utilisateur A vers le système de partage SH. Le système de partage SH propose des contenus à consulter 1 b. req_choi_SH. Le téléphone mobile T1_A du premier utilisateur A requiert la consultation de contenu mis à disposition par le deuxième utilisateur B sur son dispositif de partage SH_B. Le téléphone mobile T1_A du premier utilisateur A émet vers un dispositif de gestion de communication G une requête de consultation de ce dispositif de partage SH_B *1e. req*_*acc*_*SH*_*B*.

Le dispositif de gestion de communication G génère un identifiant unique de communication id_A↔B *1d. gen*_*id*_*ss(A*,*B)* fonction de l'appelant, en l'occurrence le premier utilisateur A, et de l'appelé, en l'occurrence le deuxième utilisateur B.

Dans un mode de réalisation particulier illustré par la figure 6a, une session de communication *2*. *ss*_*id*_A↔B est ouverte entre le téléphone mobile T1_A du premier utilisateur A et le dispositif de partage SH_B du deuxième utilisateur B. Durant cette session, le premier utilisateur A effectue, notamment, la consultation d'un message vocale *2a. acc_sh_A*→*B* à destination du deuxième utilisateur B.

Alors que le premier utilisateur A est en train de consulter un message vocal, le deuxième utilisateur B, tenter de joindre le premier utilisateur A au moyen de son téléphone mobile T1_B.

Le téléphone mobile T1_B du deuxième utilisateur B émet vers un dispositif de gestion de communication G une requête d'établissement de communication *3a. req_com_B→A* du téléphone mobile T1_B du deuxième utilisateur B vers le téléphone mobile T1_A du premier utilisateur A.

Le dispositif de gestion de communication G génère un identifiant unique de communication id_A↔B *3b. gen_id_ss(B,A)* fonction de l'appelant, en l'occurrence le deuxième utilisateur B, et de l'appelé, en l'occurrence le premier utilisateur A.

Le dispositif de gestion de communication G tente d'établir la communication avec le téléphone mobile T1_A du premier utilisateur A en tentant d'ouvrir une session de communication identifiée par l'identifiant unique de communication id_A↔B ainsi généré. Une session de communication *2.ss_id_A↔B* identifié par cet identifiant unique de communication id_A↔B existant déjà, l'ouverture de la session de communication ne peut être effectuée et une situation de communication croisées est ainsi détectée *3c. detect_cc* par le dispositif de gestion de communication G.

Plusieurs options sont alors possibles :
- soit le dispositif de gestion de communication G gère seul la situation de communications croisées comme le montre les figure 6a et 6b ;
- soit le dispositif de gestion de communication permet au premier utilisateur A de choisir de continuer à enregistrer son message ou prendre la communication entrante comme le montre la figure 6c, notamment lorsque le premier utilisateur A dispose d'un service de double appel;
- soit le dispositif de gestion de communication permet au dispositif de partage SH de gérer la situation de communication croisés comme le montre la figure 6d, notamment lorsque le premier utilisateur A ne dispose pas d'un service de double appel.

La figure 7 illustre des exemples d'identifiants de communication selon un mode de réalisation de l'invention dans lequel l'identifiant de communication est généré par concaténation dans un ordre donné d'identifiants associés à des utilisateurs, est apte à permettre d'identifier toutes communications établies entre au moins lesdits utilisateurs.

Ainsi, les données permettant d'identifier une mise en relation entre deux utilisateurs peuvent être réduites à un identifiant de communication. L'invention permet d'identifier une mise en relation entre utilisateurs quels que soient les dispositifs de communication utilisés par les utilisateurs dans cette mise en relation. En outre, l'invention permet, sans stockage de cet identifiant de détecter des situations de communications croisées à savoir que deux utilisateurs tentent simultanément de joindre l'autre des deux utilisateurs.
(a) Lors d'une communication d'un utilisateur A vers un utilisateur B, l'identifiant de communication id_A↔B est le résultat d'une concaténation dans un ordre donné conc(id_A, id_B) de l'identifiant de l'utilisateur A id_A et de l'identifiant de l'utilisateur B id_B apte à permettre d'identifier cette communication et toutes autres communications établies entre au moins lesdits utilisateurs A et B.
(b) Lors d'une communication d'un utilisateur dont l'identifiant est « martin » vers un utilisateur dont l'identifiant est « dupont », l'identifiant de communication est « dupontmartin » résultant d'une concaténation dans un ordre croissant de « martin » et « dupont » apte à permettre d'identifier cette communication et toutes autres communications établies entre au moins lesdits utilisateurs « martin » et « dupont ».
   Avantageusement, l'ordre donné est donc un ordre croissant.
(c) Lors d'une communication d'un dispositif de communication d'un utilisateur A, le dispositif de communication étant identifié par un numéro de téléphone 0296053578, vers un dispositif de communication d'un utilisateur B, le dispositif de communication étant identifié par un numéro de téléphone 0145295568, l'identifiant de communication id_A↔B est 01452955680296053578 résultant d'une concaténation dans un ordre croissant de l'identifiant 0296053578 du dispositif de communication de l'utilisateur A et de l'identifiant 0145295568 du dispositif de communication de l'utilisateur B apte à permettre d'identifier cette communication et toutes autres communications établies entre au moins lesdits dispositifs de communication ainsi identifiés desdits utilisateurs A et B.
   Avantageusement, au moins un des identifiants associés aux utilisateurs est donc un numéro d'un téléphone associé à un des utilisateurs, le téléphone étant utilisé pour mettre en communication ledit utilisateur. Ainsi, l'identification de communication permet d'identifier les communications téléphoniques des utilisateurs.
(d) Lors d'une conversation à trois d'un utilisateur A dont l'identifiant est « VUIS7332» vers deux utilisateurs B et C dont les identifiants sont respectivement « OFLI8276» et « SEIT7250 » , l'identifiant de communication est «OFLI8276SEIT7250VUIS7332 » résultant d'une concaténation dans un ordre croissant de « VUIS7332», « OFLI8276» et « SEIT7250 » apte à permettre d'identifier cette communication et toutes autres communications établies entre au moins lesdits utilisateurs « VUIS7332», « OFL18276» et « SEIT7250 » quelque soit les dispositifs de communications utilisés.

La figure 7 montre un procédé de génération d'identifiant de communication selon le même mode de réalisation de l'invention qu'à la figure 7. Le procédé de génération d'un identifiant de communication comporte une concaténation dans un ordre donné d'identifiants associés à des utilisateurs, la concaténation permettant d'obtenir l'identifiant de communication apte à permettre d'identifier toutes communications établies entre au moins lesdits utilisateurs.

Le procédé de génération G3 comporte une concaténation G31 dans un ordre donné, notamment un ordre croissant, un ordre décroissant, un ordre paramétré par une fonction, etc. La concaténation G31 concatène plusieurs identifiants soit de dispositifs de communication, soit d'utilisateurs. Notamment, lors d'une demande de génération gen_id_ss(A,B) pour la création d'une communication tel qu'un établissement de communication ou une ouverture de session de communication concernant deux utilisateurs A et B, la concaténation G31 fournit un résultat fonction des identifiants de ces deux utilisateurs A et B conc(id_A, id_B) permettant de générer l'identifiant de communication id_A↔B apte à permettre d'identifier toutes communications entre ces deux utilisateurs A et B.

Ce procédé de génération peut être réalisé sous la forme d'un programme exécuté par un processeur d'un dispositif de génération ou d'un dispositif de gestion de communication.

Ce procédé de génération d'identifiant de communication peut être utilisé pour identifier et, éventuellement, gérer des situations de communications croisées telles que :
- celles présentées aux figures 3 et 4 à savoir un utilisateur B cherche à joindre un utilisateur A qui est en train de lui déposer un message ; mais aussi
- deux appels simultanés d'un utilisateur A vers un utilisateur B et d'un utilisateur B vers un utilisateur A sur les mêmes dispositifs de communication ou des dispositifs de communication différents (tels que A appelle B qui est sorti sur son téléphone fixe alors B utilise son mobile pour joindre A),
- A écoute un message déposé par B alors que B cherche à le joindre,
- A consulte des contenus multimédia partagés par B alors que B cherche à le joindre

Ce procédé de génération d'identifiant de communication peut aussi être utilisé pour identifier et, éventuellement, gérer une facturation spécifique de communication au sein d'une communauté, notamment au sein d'une famille.

Ce procédé de génération d'identifiant de communication peut encore être utilisé pour identifier et, éventuellement, gérer des accès conditionnels à des contenus multimédias ou des services. Par exemple, deux utilisateurs A et B souhaite se faire une soirée photo. Ils mettent en partage conditionnel des photos voire des films de leur vacances, de leurs enfants... A ne pourra accéder aux contenus multimédias (personnels ou loués) de B et inversement qu'à la condition que ces deux utilisateurs soient en communication (vocal, Visio, messagerie instantanée...). L'identifiant de communication généré par l'invention permet de manière simple de vérifier s'il existe une communication entre les deux utilisateurs avant d'autoriser l'accès car nécessitant peu de stockage et de vérification et indépendante de l'initiateur de la communication.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de génération d'identifiant de communication et étant conçus pour commander l'exécution des différentes étapes de ce procédé.

L'invention vise donc aussi un programme comprenant des instructions de code de programme pour l'exécution des étapes du procédé de génération d'un identifiant de communication lorsque ledit programme est exécuté par un processeur.

Un autre objet de l'invention est un dispositif de génération comportant des moyens de concaténation dans un ordre donné d'identifiants associés à des utilisateurs, la concaténation permettant d'obtenir l'identifiant de communication apte à permettre d'identifier toutes communications établies entre au moins lesdits utilisateurs.

Un objet de l'invention est un procédé de gestion de communication comporte :
- une génération d'un identifiant de communication par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la génération étant déclenchée par une réception de requête d'établissement de communication entre le premier utilisateur et le deuxième utilisateur,
- une demande de création de communication comportant l'identifiant de communication identique pour toutes demandes de création de communication entre les mêmes au moins un premier utilisateur et un deuxième utilisateur apte à permettre un établissement d'une communication identifiée par l'identifiant de communication, entre au moins un dispositif de communication associé au premier utilisateur et un dispositif de communication associé au deuxième utilisateur.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de gestion de communication et étant conçus pour commander l'exécution des différentes étapes de ce procédé.

L'invention vise donc aussi un programme comprenant des instructions de code de programme pour l'exécution des étapes du procédé de gestion de communication lorsque ledit programme est exécuté par un processeur.

L'invention a également pour objet un dispositif de gestion de communication entre dispositifs de communication comportant :
- Des moyens de génération d'un identifiant de communication comportant des moyens de concaténation dans un ordre donné d'identifiants associés à un premier utilisateur et un deuxième utilisateur, les moyens de concaténation permettant d'obtenir l'identifiant de communication apte à permettre d'identifier toutes communications établies entre au le premier utilisateur et le deuxième utilisateur, les moyens de génération étant déclenchés par une réception de requête d'établissement de communication entre le premier utilisateur et le deuxième utilisateur,
- Des moyens de demande de création de communication comportant l'identifiant de communication identique pour toutes demandes de création de communication entre les mêmes au moins un premier utilisateur et un deuxième utilisateur apte à permettre un établissement d'une communication identifiée par l'identifiant de communication, entre au moins un dispositif de communication associé au premier utilisateur et un dispositif de communication associé au deuxième utilisateur.

L'invention a en outre pour objet un procédé de communication d'un dispositif de communication comportant une commande d'acceptation de communication suite à une réception d'une requête d'établissement de communication provenant d'un dispositif de gestion de communication, la requête d'établissement comportant un identifiant de communication identique pour toutes requête d'établissement de communication du dispositif de gestion de communication entre les mêmes au moins un premier utilisateur et un deuxième utilisateur, l'identifiant de communication ayant été généré par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la commande d'acceptation étant apte à permettre un établissement d'une communication identifiée par l'identifiant de communication, entre au moins le dispositif de communication associé au premier utilisateur et un dispositif de communication associé au deuxième utilisateur.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de communication et étant conçus pour commander l'exécution des différentes étapes de ce procédé.

L'invention vise donc aussi un programme comprenant des instructions de code de programme pour l'exécution des étapes du procédé de communication lorsque ledit programme est exécuté par un processeur.

Ces programmes peuvent utiliser n'importe quel langage de programmation et être sous la forme de code source, code objet ou code intermédiaire entre code source et code objet tel que dans une forme partiellement compilée ou dans n'importe quelle autre forme souhaitable.

L'invention a aussi pour objet un dispositif de communication comportant des moyens de commande d'acceptation de communication suite à une réception d'une requête d'établissement de communication provenant d'un dispositif de gestion de communication, la requête d'établissement comportant un identifiant de communication identique pour toutes requête d'établissement de communication du dispositif de gestion de communication entre les mêmes au moins un premier utilisateur et un deuxième utilisateur, l'identifiant de communication ayant été généré par concaténation dans un ordre donné d'identifiants associés à un premier utilisateur et un deuxième utilisateur, la concaténation permettant d'obtenir l'identifiant de communication apte à permettre d'identifier toutes communications établies entre au le premier utilisateur et le deuxième utilisateur, la commande d'acceptation étant apte à permettre un établissement d'une communication identifiée par l'identifiant de communication, entre au moins le dispositif de communication associé au premier utilisateur et un dispositif de communication associé au deuxième utilisateur.

L'invention vise aussi des supports d'information pour les programmes selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. LE programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

L'invention s'applique à tout type de réseaux de communication : mobile, fixes...Elle sera illustrée à titre d'exemple pour des téléphones mobiles et des réseaux de communication mobile.

L'invention s'applique à tout type d'architecture de communication et de protocole. Elle sera illustrée à titre d'exemple pour une architecture de communication implémentant la norme JSR289.

L'invention s'applique pour des communications entre deux, trois... utilisateurs. Elle sera illustrée à titre d'exemple pour des communications entre deux utilisateurs.

L'invention s'applique pour tout type de dispositif de communication : terminal tels que téléphones fixes ou mobiles, ordinateur, visiophone, messagerie vocale, Visio, dispositif de partage de contenus multimédia...

## Revendications

1. Procédé de gestion de communication entre dispositifs de communication, le procédé de gestion de communication étant mis en oeuvre par un dispositif de gestion de communication d'un réseau de communication, **caractérisé en ce que** le procédé de gestion de communication comporte une demande (G1) de création de communication fournissant une commande (dmd_cre_id_A→B) comportant un identifiant unique de communication (id_A↔B) identique pour toutes demandes de création de communication entre les mêmes au moins un premier utilisateur (A) et un deuxième utilisateur (B) quelque soit l'utilisateur appelant, ladite commande (dmd_cre_id_A→B) demandant la création d'une communication identifiée par l'identifiant unique de communication (id_A↔B), entre au moins un dispositif de communication associé au premier utilisateur (A) et un dispositif de communication associé au deuxième utilisateur (B).

2. Procédé de gestion de communication selon la revendication précédente, **caractérisé en ce que** la demande (G1) de création de communication comporte une demande d'ouverture de session de communication entre le premier utilisateur (A) et le deuxième utilisateur (B), la demande d'ouverture de session de communication identifiée par l'identifiant unique de communication (id_A↔B).

3. Procédé de gestion de communication selon l'une quelconque des revendications précédentes, **caractérisé en ce que** le procédé de gestion de communication comporte une génération (G3) de l'identifiant unique de communication (id_A↔B) déclenchée par une réception (G0) de requête d'établissement de communication entre le premier utilisateur et le deuxième utilisateur (*req_com_A→B*).

4. Procédé de gestion de communication selon la revendication précédente, **caractérisé en ce que** la génération est effectuée par concaténation dans un ordre donné d'identifiants associés auxdits au moins un premier utilisateur (A) et un deuxième utilisateur (B).

5. Procédé de gestion de communication selon l'une quelconque des revendications précédentes, **caractérisé en ce que** le procédé de gestion de communication comporte une détection (G4) d'une communication en cours utilisant l'identifiant unique de communication (id_A↔B).

6. Procédé de gestion de communication selon l'une quelconque des revendications précédentes, **caractérisé en ce que** le procédé de gestion de communication comporte une notification (G5) d'un dispositif de communication parmi le dispositif de communication associé au premier utilisateur (A) et le dispositif de communication associé au deuxième utilisateur (B) d'une situation de communications croisées.

7. Procédé de gestion de communication selon l'une quelconque des revendications précédentes, **caractérisé en ce que** le procédé de gestion de communication comporte, lors d'un établissement (G2) de la communication suite à la demande (G1) de création de communication, une clôture de communication (G6) en cours utilisant le même identifiant unique de communication (id_A↔B).

8. Programme comprenant des instructions de code de programme pour l'exécution des étapes du procédé de gestion de communication selon l'une quelconque des revendications précédentes lorsque ledit programme est exécuté par un processeur.

9. Dispositif de gestion de communication entre des dispositifs de communication, **caractérisé en ce que** le dispositif de gestion de communication comporte des moyens de demande (ASS) de création de communication fournissant une commande (dmd_creid_A→B) utilisant un identifiant unique de communication (id_A↔B) identique pour toutes demandes de création de communication entre les mêmes au moins un premier utilisateur (A) et un deuxième utilisateur (B) quelque soit l'utilisateur appelant, ladite commande (dmd_cre_id_A→B) demandant la création d'une communication identifiée par l'identifiant unique de communication (id_A↔B), entre au moins un dispositif de communication associé au premier utilisateur (A) et un dispositif de communication associé au deuxième utilisateur (B).

10. Procédé de communication étant mis en oeuvre par un dispositif de communication (T1.A, T1.B, MS.B, T2.B, SH.B) **caractérisé en ce que** le procédé de communication comporte une commande d'acceptation de communication (OK) suite à une réception d'une requête d'établissement de communication (*req_com_A*→*B*) entre un dispositif de communication associé au premier utilisateur (A) et un dispositif de communication associé au deuxième utilisateur (B), ladite requête d'établissement de communication provenant d'un dispositif de gestion de communication adapté pour demander la création d'une communication identifiée par un identifiant unique de communication (id_A↔B) entre le dispositif de communication associé au premier utilisateur (A) et le dispositif de communication associé au deuxième utilisateur (B), ledit identifiant unique de communication (id_A↔B) étant identique pour toutes requête d'établissement de communication du dispositif de gestion de communication entre les mêmes au moins un premier utilisateur (A) et un deuxième utilisateur (B) quelque soit l'utilisateur appelant, la commande d'acceptation déclenchant un établissement de ladite communication identifiée par l'identifiant unique de communication (id_A↔B), entre au moins le dispositif de communication associé au premier utilisateur (A) et un dispositif de communication associé au deuxième utilisateur (B).

11. Procédé de communication d'un dispositif de communication selon la revendication précédente **caractérisé en ce que** le procédé de communication comporte, lors de l'établissement de la communication déclenché par la commande d'acceptation, une clôture (stop) de communication en cours utilisant le même identifiant unique de communication (id_A↔B) entre un dispositif de communication associé au premier utilisateur (A) et un dispositif de communication associé au deuxième utilisateur (B).

12. Programme comprenant des instructions de code de programme pour l'exécution des étapes du procédé de communication selon l'une quelconque des revendications 9 ou 10 lorsque ledit programme est exécuté par un processeur.

13. Dispositif de communication **caractérisé en ce que** le dispositif de communication (T1_A, T1_B, MS_B, T2_B, SH_B) comporte des moyens de commande (T11_1, T11_B, MS1_B) d'acceptation de communication suite à une réception d'une requête d'établissement de communication entre un dispositif de communication associé au premier utilisateur (A) et un dispositif de communication associé au deuxième utilisateur (B), ladite requête d'établissement de communication provenant d'un dispositif de gestion de communication (G) adapté pour demander la création d'une communication identifiée par un identifiant unique de communication (id_A↔B) entre le dispositif de communication associé au premier utilisateur (A) et le dispositif de communication associé au deuxième utilisateur (B), ledit identifiant unique de communication (id_A↔B) étant identique pour toutes requête d'établissement de communication du dispositif de gestion de communication (G) entre les mêmes au moins un premier utilisateur (A) et un deuxième utilisateur (B) quelque soit l'utilisateur appelant, la commande d'acceptation déclenchant un établissement de ladite communication identifiée par l'identifiant unique de communication (id_A↔B), entre au moins un dispositif de communication associé au premier utilisateur (A) et le dispositif de communication associé au deuxième utilisateur (B).

14. Dispositif de communication selon la revendication précédente **caractérisé en ce que** le dispositif de communication (T1_A, T1_B, MS_B, T2_B, SH_B) comporte des moyens de clôture (T11_1, T11 B, MS1_B) de communication en cours utilisant le même identifiant unique de communication (id_A↔B) entre un dispositif de communication (T1_A) associé au premier utilisateur (A) et un dispositif de communication (T1_B, MS_B, T2_B, SH_B) associée au deuxième utilisateur (B) lors de l'établissement de la communication déclenché par la commande d'acceptation.

15. Dispositif de gestion de messagerie comportant un dispositif de communication selon l'une quelconque des revendications 13 ou 14, **caractérisé en ce que** le dispositif de gestion de messagerie (MS_B, SH_B) comporte des moyens de notification (MS4_B) d'un dispositif de communication (T1_A) en communication avec le disposition de gestion de messagerie (MS_B) d'une situation de communications croisées suite à la réception d'une notification de situation de communications croisés provenant du dispositif de gestion de communication (G).

## Patentansprüche

1. Verfahren zur Kommunikationsverwaltung zwischen Kommunikationsvorrichtungen, wobei das Verfahren zur Kommunikationsverwaltung durch eine Vorrichtung zur Kommunikationsverwaltung eines Kommunikationsnetzes umgesetzt wird, **dadurch gekennzeichnet, dass** das Verfahren zur Kommunikationsverwaltung eine Anfrage (G1) zum Einrichten einer Kommunikation aufweist, die einen Befehl (dmd_cre_id_A→B) bereitstellt, der eine einzige Kommunikationskennung (id_A↔B) aufweist, die für alle Anfragen zum Einrichten einer Kommunikation zwischen mindestens einem gleichen ersten Nutzer (A) und einem gleichen zweiten Nutzer (B) unabhängig von dem anrufenden Nutzer identisch ist, wobei der Befehl (dmd_cre_id_A→B) das Einrichten einer Kommunikation, die durch die einzige Kommunikationskennung (id_A↔B) identifiziert wird, zwischen mindestens einer Kommunikationsvorrichtung, die dem ersten Nutzer (A) zugeordnet ist, und einer Kommunikationsvorrichtung, die dem zweiten Nutzer (B) zugeordnet ist, anfordert.

2. Verfahren zur Kommunikationsverwaltung nach dem vorhergehenden Anspruch, **dadurch gekennzeichnet, dass** die Anfrage (G1) zum Einrichten einer Kommunikation eine Anfrage zum Eröffnen einer Kommunikationssession zwischen dem ersten Nutzer (A) und dem zweiten Nutzer (B) aufweist, wobei die Anfrage zum Eröffnen einer Kommunikationssession durch die einzige Kommunikationskennung (id_A↔B) identifiziert wird.

3. Verfahren zur Kommunikationsverwaltung nach einem der vorhergehenden Ansprüche, **dadurch gekennzeichnet, dass** das Verfahren zur Kommunikationsverwaltung ein Generieren (G3) der einzigen Kommunikationskennung (id_A↔B)aufweist, die durch ein Empfangen (G0) einer Anforderung zum Einrichten einer Kommunikation zwischen dem ersten Nutzer und dem zweiten Nutzer (req_com_A→B) ausgelöst wird.

4. Verfahren zur Kommunikationsverwaltung nach dem vorhergehenden Anspruch, **dadurch gekennzeichnet, dass** das Generieren durch Verketten von Kennungen, die mindestens einem ersten Nutzer (A) und einem zweiten Nutzer (B) zugeordnet sind, in einer vorgegebenen Reihenfolge durchgeführt wird.

5. Verfahren zur Kommunikationsverwaltung nach einem der vorhergehenden Ansprüche, **dadurch gekennzeichnet, dass** das Verfahren zur Kommunikationsverwaltung ein Erkennen (G4) einer laufenden Kommunikation aufweist, die die einzige Kommunikationskennung (id_A↔B)verwendet.

6. Verfahren zur Kommunikationsverwaltung nach einem der vorhergehenden Ansprüche, **dadurch gekennzeichnet, dass** das Verfahren zur Kommunikationsverwaltung ein Benachrichtigen (G5) über eine Situation von sich überschneidenden Anrufen von einer Kommunikationsvorrichtung unter der Kommunikationsvorrichtung, die dem ersten Nutzer (A) zugeordnet ist, und der Kommunikationsvorrichtung, die dem zweiten Nutzer (B) zugeordnet ist, aufweist.

7. Verfahren zur Kommunikationsverwaltung nach einem der vorhergehenden Ansprüche, **dadurch gekennzeichnet, dass** das Verfahren zur Kommunikationsverwaltung während eines Einrichtens (G2) der Kommunikation infolge der Anfrage (G1) zum Einrichten einer Kommunikation ein Beenden der laufenden Kommunikation (G6) aufweist, die die einzige Kommunikationskennung (id_A↔B)verwendet.

8. Programm, umfassend Programmcodebefehle zum Ausführen der Schritte des Verfahrens zur Kommunikationsverwaltung nach einem der vorhergehenden Ansprüche, wenn das Programm von einem Prozessor ausgeführt wird.

9. Vorrichtung zur Kommunikationsverwaltung zwischen Kommunikationsvorrichtungen, **dadurch gekennzeichnet, dass** die Vorrichtung zur Kommunikationsverwaltung Anfragemittel (ASS) zum Einrichten einer Kommunikation aufweist, die einen Befehl (dmd_cre_id_A→B) bereitstellen, der eine einzige Kommunikationskennung (id_A↔B)verwendet, die für alle Anfragen zum Einrichten einer Kommunikation zwischen mindestens einem gleichen ersten Nutzer (A) und einem gleichen zweiten Nutzer (B) unabhängig von dem anrufenden Nutzer identisch ist, wobei der Befehl (dmd_cre_id_A→B) das Einrichten einer Kommunikation, die durch die einzige Kommunikationskennung (id_A↔B) identifiziert wird, zwischen mindestens einer Kommunikationsvorrichtung, die dem ersten Nutzer (A) zugeordnet ist, und einer Kommunikationsvorrichtung, die dem zweiten Nutzer (B) zugeordnet ist, anfordert.

10. Kommunikationsverfahren, das von einer Kommunikationsvorrichtung (T1_A, T1_B, MS_B, T2_B, SH_B) umgesetzt wird, **dadurch gekennzeichnet, dass** das Kommunikationsverfahren einen Befehl zum Annehmen einer Kommunikation (OK) infolge eines Erhaltens einer Anforderung zum Einrichten einer Kommunikation (*req*_*com*_*A*→*B*) zwischen einer Kommunikationsvorrichtung, die einem ersten Nutzer (A) zugeordnet ist, und einer Kommunikationsvorrichtung, die einem zweiten Nutzer (B) zugeordnet ist, aufweist, wobei die Anforderung zum Einrichten einer Kommunikation von einer Vorrichtung zur Kommunikationsverwaltung kommt, die geeignet ist, das Einrichten einer Kommunikation, die durch eine einzige Kommunikationskennung (id_A↔B) identifiziert wird, zwischen der Kommunikationsvorrichtung, die dem ersten Nutzer (A) zugeordnet ist, und der Kommunikationsvorrichtung, die dem zweiten Nutzer (B) zugeordnet ist, anzufordern, wobei die einzige Kommunikationskennung (id_A↔B) für alle Anfragen zum Einrichten einer Kommunikation von der Vorrichtung zur Kommunikationsverwaltung zwischen mindestens einem gleichen ersten Nutzer (A) und einem gleichen zweiten Nutzer (B) unabhängig von dem anrufenden Nutzer identisch ist, wobei der Befehl zum Annehmen ein Einrichten der Kommunikation, die durch die einzige Kommunikationskennung (id_A↔B) identifiziert wird, zwischen mindestens der Kommunikationsvorrichtung, die dem ersten Nutzer (A) zugeordnet ist, und einer Kommunikationsvorrichtung, die dem zweiten Nutzer (B) zugeordnet ist, auslöst.

11. Kommunikationsverfahren einer Kommunikationsvorrichtung nach dem vorhergehenden Anspruch, **dadurch gekennzeichnet, dass** das Kommunikationsverfahren bei dem Einrichten einer Kommunikation, das durch den Befehl zum Annehmen ausgelöst wird, ein Beenden (*stop*) einer laufenden Kommunikation, die die gleiche einzige Kommunikationskennung (id_A↔B) verwendet, zwischen einer Kommunikationsvorrichtung, die dem ersten Nutzer (A) zugeordnet ist, und einer Kommunikationsvorrichtung, die dem zweiten Nutzer (B) zugeordnet ist, aufweist.

12. Programm, umfassend Programmcodebefehle zum Ausführen der Schritte des Kommunikationsverfahrens nach einem der Ansprüche 9 oder 10, wenn das Programm von einem Prozessor ausgeführt wird.

13. Kommunikationsvorrichtung, **dadurch gekennzeichnet, dass** die Kommunikationsvorrichtung (T1_A, T1_B, MS_B,T2_B, SH_B) Mittel zum Steuern (T11_1, T11_B, MS1_B) des Annehmens einer Kommunikation infolge eines Erhaltens einer Anforderung zum Einrichten einer Kommunikation zwischen einer Kommunikationsvorrichtung, die einem ersten Nutzer (A) zugeordnet ist, und einer Kommunikationsvorrichtung, die einem zweiten Nutzer (B) zugeordnet ist, aufweist, wobei die Anforderung zum Einrichten einer Kommunikation von einer Vorrichtung zur Kommunikationsverwaltung (G) kommt, die geeignet ist, das Einrichten einer Kommunikation, die durch eine einzige Kommunikationskennung (id_A↔B) identifiziert wird, zwischen der Kommunikationsvorrichtung, die dem ersten Nutzer (A) zugeordnet ist, und der Kommunikationsvorrichtung, die dem zweiten Nutzer (B) zugeordnet ist, anzufordern, wobei die einzige Kommunikationskennung (id_A↔B) für alle Anfragen zum Einrichten einer Kommunikation von der Vorrichtung zur Kommunikationsverwaltung (G) zwischen mindestens einem gleichen ersten Nutzer (A) und einem gleichen zweiten Nutzer (B) unabhängig von dem anrufenden Nutzer identisch ist, wobei der Befehl zum Annehmen ein Einrichten der Kommunikation, die durch die einzige Kommunikationskennung (id_A↔B) identifiziert wird, zwischen mindestens einer Kommunikationsvorrichtung, die dem ersten Nutzer (A) zugeordnet ist, und der Kommunikationsvorrichtung, die dem zweiten Nutzer (B) zugeordnet ist, auslöst.

14. Kommunikationsvorrichtung nach dem vorhergehenden Anspruch, **dadurch gekennzeichnet, dass** die Kommunikationsvorrichtung (T1_A, T1_B, MS_B, T2_B, SH_B) Mittel zum Beenden (T11_1, T11_B, MS1_B) einer laufenden Kommunikation, die die gleiche einzige Kommunikationskennung (id_A↔B) verwendet, zwischen einer Kommunikationsvorrichtung (T1_A), die dem ersten Nutzer (A) zugeordnet ist, und einer Kommunikationsvorrichtung (T1_B, MS_B, T2_B, SH_B), die dem zweiten Nutzer (B) zugeordnet ist, bei dem Einrichten der Kommunikation, das durch den Befehl zum Annehmen ausgelöst wird, aufweist.

15. Vorrichtung zur Nachrichtenübermittlungsverwaltung, umfassend eine Kommunikationsvorrichtung nach einem der Ansprüche 13 oder 14, **dadurch gekennzeichnet, dass** die Vorrichtung zur Nachrichtenübermittlungsverwaltung (MS_B, SH_B) Mittel zum Benachrichtigen (MS4_B) einer Kommunikationsvorrichtung (T1_A) aufweist, die mit der Vorrichtung zur Nachrichtenübermittlungsverwaltung (MS_B) in Kommunikation ist, über eine Situation von sich überschneidenden Anrufen infolge des Empfangens von einer Benachrichtigung über eine Situation von sich überschneidenden Anrufen, die von der Vorrichtung zur Kommunikationsverwaltung (G) kommt.

## Claims

1. Method for managing communication between communication devices, the method for managing communication being implemented by a device for managing communication in a communication network, **characterized in that** the method for managing communication comprises a request (G1) to create communication providing a command (dmd_cre_id_A→B) having a unique communication identifier (id_A↔B) that is identical for all requests to create communication between the same at least a first user (A) and a second user (B) whatever the calling user, said command (dmd_cre_id_A→B) requesting the creation of a communication identified by the unique communication identifier (id_A↔B), between at least a communication device associated with the first user (A) and a communication device associated with the second user (B).

2. Method for managing communication according to the preceding claim, **characterized in that** the request (G1) to create communication comprises a request to open a communication session between the first user (A) and the second user (B), the request to open a communication session being identified by the unique communication identifier (id_A↔B).

3. Method for managing communication according to either of the preceding claims, **characterized in that** the method for managing communication comprises a generation (G3) of the unique communication identifier (id_A↔B), which generation is triggered by a reception (G0) of a request to set up communication between the first user and the second user (*req_com_A→B*).

4. Method for managing communication according to the preceding claim, **characterized in that** the generation is carried out by concatenation in a given order of identifiers associated with said at least a first user (A) and a second user (B).

5. Method for managing communication according to any one of the preceding claims, **characterized in that** the method for managing communication comprises a detection (G4) of a communication in progress using the unique communication identifier (id_A↔B).

6. Method for managing communication according to any one of the preceding claims, **characterized in that** the method for managing communication comprises a notification (G5) of a communication device from among the communication device associated with the first user (A) and the communication device associated with the second user (B) about a crossed communications situation.

7. Method for managing communication according to any one of the preceding claims, **characterized in that** the method for managing communication comprises, at the time of a setup (G2) of the communication following the request (G1) to create communication, a closure of the communication (G6) in progress using the same unique communication identifier (id_A↔B).

8. Program comprising program code instructions for executing the steps of the method for managing communication according to any one of the preceding claims when said program is executed by a processor.

9. Device for managing communication between communication devices, **characterized in that** the device for managing communication comprises means for requesting (ASS) creation of communication providing a command (dmd_cre_id_A→B) using a unique communication identifier (id_A↔B)that is identical for all requests to create communication between the same at least a first user (A) and a second user (B) whatever the calling user, said command (dmd_cre_id_A→B) requesting the creation of a communication identified by the unique communication identifier (id_A↔B), between at least a communication device associated with the first user (A) and a communication device associated with the second user (B).

10. Method for communication being implemented by a communication device (T1_A, T1_B, MS_B, T2_B, SH_B), **characterized in that** the method for communication comprises a command to accept communication (OK) following a reception of a request to set up communication (*req*_*com*_*A*→*B*) between a communication device associated with the first user (A) and a communication device associated with the second user (B), said request to set up communication coming from a device for managing communication that is adapted to request the creation of a communication identified by a unique communication identifier (id_A↔B)between the communication device associated with the first user (A) and the communication device associated with the second user (B), said unique communication identifier (id_A↔B) being identical for all requests to set up communication by the device for managing communication between the same at least a first user (A) and a second user (B) whatever the calling user, the command to accept triggering a setup of said communication identified by the unique communication identifier (id_A↔B), between at least the communication device associated with the first user (A) and a communication device associated with the second user (B).

11. Method for communication by a communication device according to the preceding claim, **characterized in that** the method for communication comprises, at the time of the setup of the communication triggered by the command to accept, a closure (*stop*) of communication in progress using the same unique communication identifier (id_A↔B) between a communication device associated with the first user (A) and a communication device associated with the second user (B).

12. Program comprising program code instructions for executing the steps of the method for communication according to either of Claims 9 and 10 when said program is executed by a processor.

13. Communication device, **characterized in that** the communication device (T1_A, T1_B, MS_B, T2_B, SH_B) comprises means for commanding (T11_1, T11_B, MS1_B) acceptance of communication following a reception of a request to set up communication between a communication device associated with the first user (A) and a communication device associated with the second user (B), said request to set up communication coming from a device for managing communication (G) that is adapted to demand the creation of a communication identified by a unique communication identifier (id_A↔B) between the communication device associated with the first user (A) and the communication device associated with the second user (B), said unique communication identifier (id_A↔B) being identical for all requests to set up communication by the device for managing communication (G) between the same at least one first user (A) and a second user (B) whatever the calling user, the command to accept triggering an instance of setup of said communication identified by the unique communication identifier (id_A↔B), between at least one communication device associated with the first user (A) and the communication device associated with the second user (B).

14. Device for communication according to the preceding claim, **characterized in that** the device for communication (T1_A, T1_B, MS_B, T2_B, SH_B) comprises means for closing (T11_1, T11_B, MS1_B) communication in progress using the same unique communication identifier (id_A↔B) between a communication device (T1_A) associated with the first user (A) and a communication device (T1_B, MS_B, T2_B, SH_B) associated with the second user (B) at the time of the setup of the communication, as triggered by the command to accept.

15. Messaging management device comprising a communication device according to either of Claims 13 and 14, **characterized in that** the messaging management device (MS_B, SH_B) comprises means for notifying (MS4_B) a communication device (T1_A) communicating with the messaging management device (MS_B) about a crossed communications situation following the reception of a crossed communications situation notification from the device for managing communication (G).
